# EUROPEAN PATENT APPLICATION

(11) **EP 2 434 117 A1**
(43) Date of publication of application: **28.03.2012**
(21) Application number: 09844936.6
(22) Date of filing: 19.05.2009
(51) Int. Cl.: F01N 3/08, F01N 3/02, F01N 3/20

(54) **EXHAUST EMISSION CONTROL DEVICE FOR INTERNAL COMBUSTION ENGINE**

(71) Applicant: Toyota Jidosha Kabushiki Kaisha, Toyota-shi, Aichi 471-8571 (JP)
(72) Inventor: ASANUMA, Takamitsu, Toyota-shi Aichi 471-8571 (JP); NISHIOKA, Hiromasa, Toyota-shi Aichi 471-8571 (JP); IMAI, Daichi, Toyota-shi Aichi 471-8571 (JP); UMEMOTO, Kazuhiro, Toyota-shi Aichi 471-8571 (JP)
(74) Representative: Jackson, Martin Peter
(86) International application number: PCT/JP2009/059480
(87) International publication number: WO 2010/134204

(57) **Abstract**

An exhaust purification system of an internal combustion engine comprising an NO_{X} holding material arranged in an engine exhaust passage, having a catalyst metal containing silver, holding NO_{X} contained in the exhaust gas in the form of silver nitrate by the catalyst metal when an air-fuel ratio of inflowing exhaust gas is lean, and releasing the held NO_{X} if the air-fuel ratio of the inflowing exhaust gas becomes a stoichiometric air-fuel ratio or rich. The NO_{X} holding material has a scatter temperature at which catalyst metal scatters in the form of silver nitrate if the temperature rises. When it is time to perform control raising the temperature of the NO_{X} holding material to the scatter temperature or above, the NO_{X} held in the NO_{X} holding material is released by making the air-fuel ratio of the exhaust gas flowing into the NO_{X} holding material the stoichiometric air-fuel ratio or rich.

## Description

### TECHNICAL FIELD

The present invention relates to an exhaust purification system of an internal combustion engine.

### BACKGROUND ART

The exhaust gas in a diesel engine, gasoline engine, or other internal combustion engines contains ingredients such as carbon monoxide (CO), unburnt fuel (HC), nitrogen oxides (NO_{X}), and particulate matter (PM). An internal combustion engine is provided with an exhaust purification system for purifying these ingredients.

As a method of removing nitrogen oxides, it is known to arrange in an engine exhaust passage an NO_{X} storage reduction catalyst that stores NO_{X} temporarily and reduces the NO_{X} when releasing it. The NO_{X} storage reduction catalyst stores NO_{X} when the air-fuel ratio of the exhaust gas is lean. When the NO_{X} stored amount has reached an allowable amount, making the air-fuel ratio of the exhaust gas rich or stoichiometric will cause the stored NO_{X} to be released. The released NO_{X} is reduced to N₂ by carbon monoxide or another reducing agent contained in the exhaust gas. The NO_{X} storage reduction catalyst has an NO_{X} absorbent for storing NO_{X}. The NO_{X} absorbent contains an alkali metal, alkali earth metal, etc., but these alkali metal and alkali earth metal are known to scatter.

Japanese Patent Publication (A) No. 2003-83052 discloses an exhaust purification system provided with a storage catalyst to which at least one metal selected from a group comprising alkali metals and alkali earth metals is added as an absorbent and with a three-way catalyst arranged at a downstream side of the storage catalyst and to which an acidic substance having an alkali trapping function is added. It is disclosed that the system is able to prevent the alkali metal and the like from scattering and flowing into the three-way catalyst and the three-way catalyst from falling in performance.

Japanese Patent Publication (A) No. 2007-247589 discloses a catalyst diagnosis system provided with a storing material arranged in the exhaust passage of an engine and storing or releasing toxic ingredients in the exhaust, a scattering detecting means for detecting a scattered amount of potassium etc. contained in the storing material, and a diagnosing means for diagnosing a deteriorated state based on the scattered amount detected by the scattering detecting means. It is disclosed-that this catalyst diagnosis system is capable of diagnosing an upper limit value of storage ability.

Japanese Patent Publication (A) No. 2002-21538 discloses an exhaust purification catalyst system adding potassium to an NO_{X} catalyst as an NO_{X} absorbent, providing a three-way catalyst at a downstream side of the NO_{X} catalyst, and providing a phosphorus-carrying alkali metal trapping means between the NO_{X} catalyst and the three-way catalyst. It is disclosed that this catalyst system is able to prevent potassium from reaching the three-way catalyst at the downstream side by reacting the potassium vaporizing and scattering from the NO_{X} catalyst with phosphorus to trap it at an alkali metal trapping means.

### CITATION LIST

### Patent Literature

PLT 1: Japanese Patent Publication (A) No. 2003-83052
PLT 2: Japanese Patent Publication (A) No. 2007-247589
PLT 3: Japanese Patent Publication (A) No. 2002-21538

### SUMMARY OF INVENTION

### Technical Problem

An NO_{X} storage reduction catalyst can store NO_{X} using an absorbent containing an alkali metal etc. On the other hand, a catalyst metal can be made to hold NO_{X}. For example, to purify the NO_{X} contained in the exhaust gas, if forming the catalyst metal by silver, the catalyst metal can hold the NO_{X}. With this exhaust treatment device, it is possible to have the inflowing NO_{X} held at the catalyst metal in the state of silver nitrate.

In this regard, the inventors discovered that if arranging an exhaust treatment device including a catalyst metal containing silver in exhaust gas of a predetermined temperature or higher, the NO_{X} purification ability will fall. Particularly, they discovered that if repeatedly arranging it in exhaust gas of a predetermined temperature or higher, the NO_{X} purification ability will drop.

For example, when an exhaust purification system is provided with a particulate filter and regenerating the particulate filter, the exhaust gas becomes a high temperature. Due to the exhaust gas becoming a high temperature, the other exhaust treatment devices arranged in the engine exhaust passage will also become a high temperature. If such an exhaust purification system is provided with an exhaust treatment device including a catalyst metal containing silver, the NO_{X} purification ability will drop.

### Solution to Problem

The present invention has as its object to provide an exhaust purification system of an internal combustion engine provided with an NO_{X} holding material including a catalyst metal containing silver and suppressing a drop in the NO_{X} purification ability.

An exhaust purification system of an internal combustion engine according to the present invention comprising an NO_{X} holding material arranged in an engine exhaust passage, having a catalyst metal containing silver, holding NO_{X} contained in the exhaust gas in the form of silver nitrate at the catalyst metal when an air-fuel ratio of inflowing exhaust gas is lean, and releasing the held NO_{X} if the air-fuel ratio of the inflowing exhaust gas becomes a stoichiometric air-fuel ratio or rich. The NO_{X} holding material has a scatter temperature at which catalyst metal scatters in the form of silver nitrate if the temperature rises. When it is time to perform control to raise the temperature of the NO_{X} holding material to the scatter temperature or above, the system makes the air-fuel ratio of the exhaust gas flowing into the NO_{X} holding material a stoichiometric air-fuel ratio or rich to thereby make the NO_{X} holding material release the held NO_{X}.

In the above-described invention, the exhaust purification system may comprise an NO_{X} storage reduction catalyst arranged in the engine exhaust passage downstream of the NO_{X} holding material, including a catalyst metal and an NO_{X} absorbent holding NO_{X}, holding the NO_{X} contained in the exhaust gas at the NO_{X} absorbent when the air-fuel ratio of the inflowing exhaust gas is lean, and releasing the held NO_{X} when the air-fuel ratio of the inflowing exhaust gas becomes the stoichiometric air-fuel ratio or rich, the NO_{X} storage reduction catalyst holds SO_{X} besides NO_{X}, and when it is time to perform sulfur poisoning recovery control raising the temperature of the NO_{X} storage reduction catalyst to an SO_{X} releasable temperature and making the air-fuel ratio of the exhaust gas flowing into the NO_{X} storage reduction catalyst the stoichiometric air-fuel ratio or rich so as to release the SO_{X}, the NO_{X} holding material is made to release the held NO_{X}.

In the above-described invention, the exhaust purification system may comprise a particulate filter arranged in the engine exhaust passage and trapping particulate matter contained in the exhaust gas, and when it is time to perform regeneration control raising the temperature of the particulate filter to the temperature where the trapped particulate matter burns, the NO_{X} holding material is made to release the held NO_{X}.

In the above-described invention, the exhaust purification system preferably performs control estimating the amount of catalyst metal remaining at the NO_{X} holding material when catalyst metal scatters from the NO_{X} holding material, and reduces the NO_{X} amount exhausted to the engine exhaust passage from the engine body in accordance with the drop in the amount of remaining catalyst metal.

In the above-described invention, the exhaust purification system preferably performs control making the air-fuel ratio of exhaust gas flowing into the NO_{X} holding material the stoichiometric air-fuel ratio or rich so as to release NO_{X} when a held amount of NO_{X} of the NO_{X} holding material exceeds a predetermined held amount judgment value, estimates the amount of catalyst metal remaining at the NO_{X} holding material when the catalyst metal scatters from the NO_{X} holding material, and decreases the held amount judgment value in accordance with the drop in the amount of remaining catalyst metal.

In the above-described invention, the exhaust purification system preferably comprises an NO_{X} selective reducing catalyst arranged in the engine exhaust passage downstream of the NO_{X} holding material and selectively reducing NO_{X} by feeding a reducing agent, estimates the amount of catalyst metal remaining at the NO_{X} holding material when catalyst metal scatters from the NO_{X} holding material, and increases the feed amount of reducing agent to the NO_{X} selective reducing catalyst in accordance with the drop in the amount of remaining catalyst metal.

In the above-described invention, the exhaust purification system preferably estimates the amount of catalyst metal remaining at the NO_{X} holding material when catalyst metal scatters from the NO_{X} holding material, and estimates the NO_{X} amount flowing out from the NO_{X} holding material based on the remaining amount of catalyst metal.

### Advantageous Effects of Invention

According to the present invention, it is possible to provide an exhaust purification system of an internal combustion engine provided with an NO_{X} holding material including a catalyst metal containing silver and suppressing a drop in the NO_{X} purification ability.

### BRIEF DESCRIPTION OF DRAWINGS

FIG. 1 is a schematic view of an internal combustion engine of a first embodiment.
FIG. 2 is an enlarged schematic cross-sectional view of an NO_{X} holding material.
FIG. 3 is a time chart of a first NO_{X} purge control in the first embodiment.
FIG. 4 is a map for calculating an NO_{X} amount exhausted from an engine body.
FIG. 5 is an explanatory view of a fuel injection pattern at the time of normal operation.
FIG. 6 is an explanatory view of an injection pattern when the air-fuel ratio of the exhaust gas exhausted from the engine body becomes stoichiometric or rich or when raising the exhaust gas temperature.
FIG. 7 is a time chart of operational control in the first embodiment.
FIG. 8 is a flowchart of a second NO_{X} purge control in the first embodiment.
FIG. 9 is a time chart of a second NO_{X} purge control in the first embodiment.
FIG. 10 is an explanatory view of an alternate injection pattern when the air-fuel ratio of the exhaust gas in the first embodiment becomes stoichiometric or rich.
FIG. 11 is a schematic view of an internal combustion engine in a second embodiment.
FIG. 12 is an enlarged schematic cross-sectional view of the NO_{X} storage reduction catalyst.
FIG. 13 is a flowchart of operational control in the second embodiment.
FIG. 14 is a graph showing the relationship of a scattered amount of the catalyst metal of the NO_{X} holding material and an NO_{X} holdable amount in a third embodiment.
FIG. 15 is a flowchart for estimating the amount of catalyst metal of the NO_{X} holding material.
FIG. 16 is a map for calculating the scattered amount of the catalyst metal.
FIG. 17 is a flowchart of second operational control in the third embodiment.
FIG. 18 is a map for calculating an NO_{X} amount flowing out from the NO_{X} holding material in the second operational control of the third embodiment.
FIG. 19 is a time chart of second operational control in the third embodiment.
FIG. 20 is a schematic view of an internal combustion engine performing third operational control in the third embodiment.
FIG. 21 is a flowchart of third operational control in the third embodiment.
FIG. 22 is a flowchart of first operational control in a fourth embodiment.
FIG. 23 is a graph showing the relationship of a bed temperature of an NO_{X} holding material and an NO_{X} holdable amount.
FIG. 24 is a graph showing the relationship of a recirculation rate in the engine body and an NO_{X} amount exhausted from the engine body.
FIG. 25 is a time chart of first operational control in the fourth embodiment.
FIG. 26 is a flowchart of second operational control in the fourth embodiment.
FIG. 27 is a graph showing the relationship of an NO_{X} amount flowing into the NO_{X} holding material and the NO_{X} purification rate.
FIG. 28 is a time chart of second operational control in the fourth embodiment.

### DESCRIPTION OF EMBODIMENTS

### First Embodiment

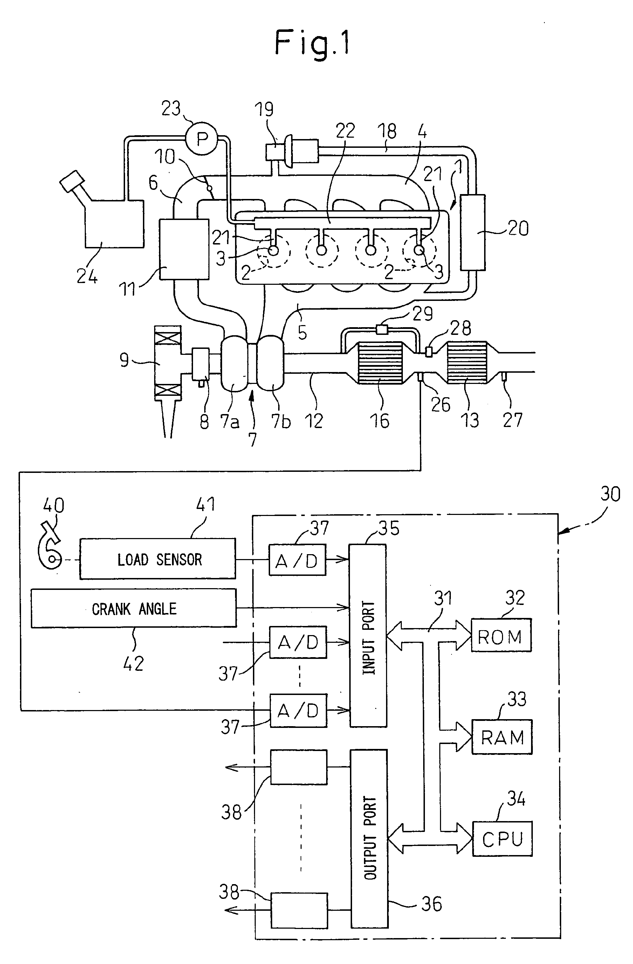

The exhaust purification system of an internal combustion engine in a first embodiment will be explained with reference from FIG. 1 to FIG. 10.

FIG. 1 is a schematic view of an internal combustion engine in the present embodiment. In the present embodiment, a compression ignition type diesel engine will be used as an example for the explanation. The internal combustion engine in the present embodiment is arranged in, among vehicles, an automobile.

The internal combustion engine is provided with an engine body 1. Further, the internal combustion engine is provided with an exhaust purification system. The engine body 1 includes combustion chambers 2 as cylinders, electronic control type fuel injectors 3 for injecting fuel to the respective combustion chambers 2, an intake manifold 4, and an exhaust manifold 5.

The intake manifold 4 is connected through an intake duct 6 to the outlet of a compressor 7a of an exhaust turbocharger 7. An inlet of the compressor 7a is connected through an intake air detector 8 to an air cleaner 9. A throttle valve 10 driven by a step motor is arranged inside the intake duct 6. Further, a cooling device 11 is arranged in the intake duct 6 for cooling the intake air flowing inside the intake duct 6. In the example shown in FIG. 1, engine cooling water is guided to the cooling device 11. The engine cooling water is used to cool the intake air.

On the other hand, the exhaust manifold 5 is connected to the inlet of a turbine 7b of the exhaust turbocharger 7. The outlet of the exhaust turbine 7b is connected to an exhaust treatment device purifying the exhaust gas exhausted from the engine body 1.

The exhaust purification system in the present embodiment is provided with a particulate filter 16. The particulate filter 16 is an exhaust treatment device removing particulate matter contained in the exhaust gas. The particulate filter 16 is connected through an exhaust pipe 12 to the outlet of the turbine 7b. The exhaust purification system in the present embodiment is provided with an NO_{X} holding material 13. The NO_{X} holding material 13 is an exhaust treatment device for purifying the NO_{X} contained in the exhaust gas. The NO_{X} holding material 13 in the present embodiment is arranged inside the engine exhaust passage downstream of the particulate filter 16.

Between the exhaust manifold 5 and the intake manifold 4, an exhaust gas recirculation (hereinafter referred to as an "EGR") passage 18 is arranged for exhaust gas recirculation. An electronic control type EGR control valve 19 is arranged in the EGR passage 18. Further, around the EGR passage 18 is arranged a cooling device 20 for cooling the EGR gas flowing through the inside of the EGR passage 18. In the embodiment shown in FIG. 1, the engine cooling water is guided inside the cooling device 20. The engine cooling water is used to cool the EGR gas.

The fuel injectors 3 are connected through fuel feed tubes 21 to a common rail 22. The common rail 22 is connected through an electronic control type variable discharge fuel pump 23 to a fuel tank 24. The fuel stored in the fuel tank 24 is supplied by the fuel pump 23 to the inside of the common rail 19. The fuel supplied to the inside of the common rail 22 is supplied through the fuel feed tubes 21 to the fuel injectors 3.

An electronic control unit 30 is comprised of a digital computer. The electronic control unit 30 in the present embodiment functions as the control device of the exhaust purification system. The electronic control unit 30 includes components connected with each other by a bidirectional bus 31 such as a ROM (read only memory) 32, RAM (random access memory) 33, CPU (microprocessor) 34, input port 35, and output port 36.

The ROM 32 is a read-only storage device. The ROM 32 stores in advance information such as maps necessary for control. The CPU 34 can make perform any calculation or judgment. The RAM 33 is a read-write storage device. The RAM 33 can store operation history and other information or temporarily store calculation results.

Downstream of the particulate filter 16, a temperature sensor 26 is arranged as a temperature detection device for detecting the temperature of the particulate filter 16. Downstream of the NO_{X} holding material 13, a temperature sensor 27 is arranged as a temperature detection device for detecting the temperature of the NO_{X} holding material 13. Upstream of the NO_{X} holding material 13, an air-fuel ratio sensor 28 is arranged for detecting the air-fuel ratio of the exhaust gas flowing into the NO_{X} holding material 13. A pressure difference sensor 29 is attached to the particulate filter 16 for detecting the pressure difference before and after the particulate filter 16. The output signals of these temperature sensors 26 and 27, air-fuel ratio sensor 28, and pressure difference sensor 29 are input through the corresponding AD converter 37 to the input port 35.

The output signal of the intake air detector 8 is input through a corresponding AD converter 37 to the input port 35. An accelerator pedal 40 is connected to a load sensor 41 generating an output voltage proportional to the depression amount of the accelerator pedal 40. The output voltage of the load sensor 41 is input through a corresponding AD converter 37 to the input port 35. Further, a crank angle sensor 42 is connected to the input port 35, generating an output pulse every time the crankshaft rotates by for example 15°. The output of the crank angle sensor 42 can be used to detect the rotational frequency of the engine body.

On the other hand, the output port 36 has the fuel injectors 3, throttle valve 10 drive step motor, EGR control valve 19, and fuel pump 23 connected to it through corresponding drive circuits 38.

The particulate filter 16 is a filter that removes carbon fine particles, sulfates and other ionic fine particles and other particulate matter (particulate) contained in the exhaust gas. The particulate filter has, for example, a honeycomb structure and has a plurality of flow passages extending in the direction of gas flow. In the plurality of flow passages, flow passages with a sealed downstream end and flow passages with a sealed upstream end are alternatively formed. The partition walls of the flow passages are formed from a porous material such as cordierite. When exhaust gas passes through the partition wall, the particulate is trapped.

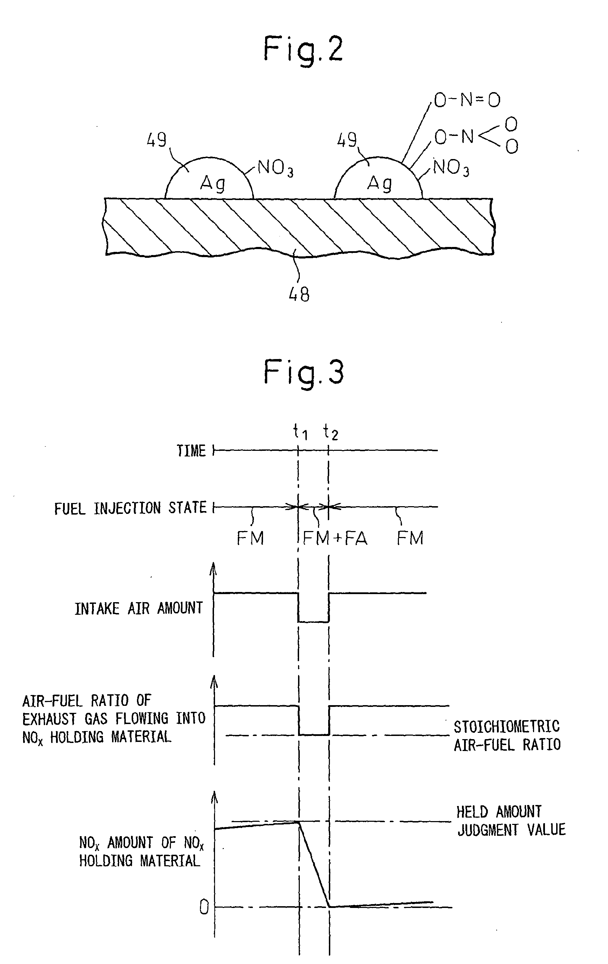

FIG. 2 shows an enlarged schematic cross-sectional view of an NO_{X} holding material. The NO_{X} holding material 13 in the present embodiment is comprised of a substrate on which a catalyst carrier 48 comprised of for example alumina (Al₂O₃) is formed. The catalyst carrier 48 may be made using any material that can carry a catalyst metal 49. For example, the catalyst carrier 48 may include cordierite. The catalyst carrier 48 carries dispersed catalyst metal 49 on its surface. The catalyst metal 49 of the NO_{X} holding material 13 in the present embodiment contains silver.

In the present invention, the ratio of air and fuel (hydrocarbons) of exhaust gas fed to the engine intake passage, combustion chamber, or engine exhaust passage is called the air-fuel ratio (A/F) of the exhaust gas. Further, in the present invention, "hold" is used in the sense including "adsorb" and "store".

The NO_{X} holding material 13 adsorbs the NO_{X} contained in the exhaust gas at the catalyst metal 49 when the air-fuel ratio of the exhaust gas is lean. The NO_{X} contained in the exhaust gas is held in the form of silver nitrate at the catalyst metal 49. Further, the NO_{X} is held through oxygen at the catalyst metal 49. As opposed to this, when the air-fuel ratio of the exhaust gas is rich or stoichiometric, the NO_{X} held at the catalyst metal 49 is released. The released NO_{X} is reduced by the unburnt hydrocarbons, carbon monoxide, and the like contained in the exhaust gas into N₂.

The NO_{X} holding material has a maximum amount of NO_{X} that it can hold, that is, a holdable amount. If the NO_{X} held amount reaches the holdable amount, it can no longer hold NO_{X}. That is, it can no longer remove the NO_{X} contained in the exhaust gas. In the present embodiment, when the NO_{X} amount held in the NO_{X} holding material exceeds a predetermined held amount judgment value, NO_{X} purge control is carried out for making the NO_{X} holding material release the NO_{X}. The held amount judgment value in the present embodiment is a value smaller than the NO_{X} holdable amount of the NO_{X} holding material.

FIG. 3 shows a time chart of first NO_{X} purge control in the present embodiment. The internal combustion engine continues normal operation until a time t₁. The exhaust purification system of the internal combustion engine in the present embodiment is provided with a detection device detecting the NO_{X} amount held in the NO_{X} holding material. The detection device in the present embodiment includes the electronic control unit 30.

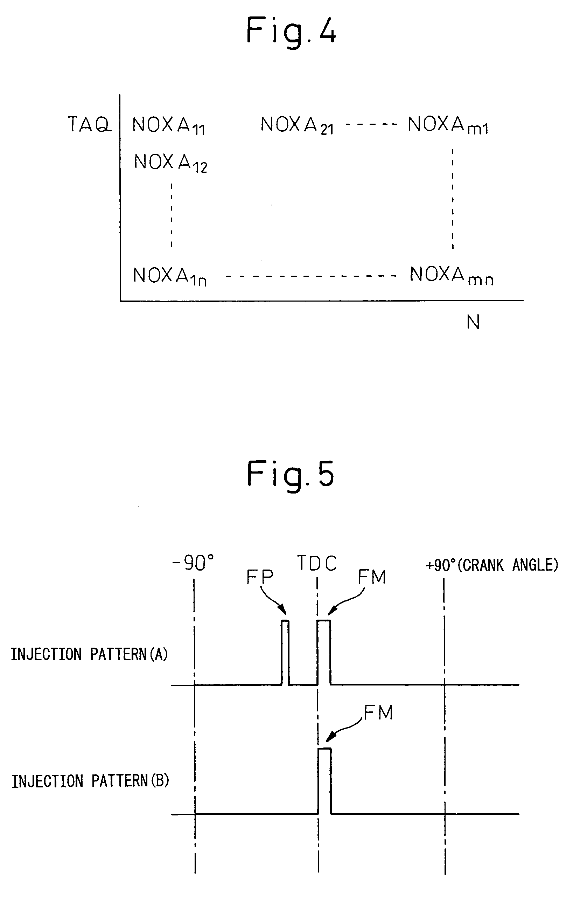

FIG. 4 shows a map of the NO_{X} amount exhausted from the engine body per unit time in the present embodiment. For example, a map is created in advance for the NO_{X} amount NOXA exhausted per unit time as a function of the engine rotational frequency N and injection amount TAQ of fuel injected into a combustion chamber 2. This map is stored in the ROM 32 of the electronic control unit 30 for example. In the present embodiment, the NO_{X} amount exhausted from the engine body 1 becomes equal to the NO_{X} amount flowing into the NO_{X} holding material 13. This map may be used to calculate the NO_{X} amount flowing into the NO_{X} holding material 13 per unit time and held in the NO_{X} holding material in accordance with the operating state. By cumulatively adding the NO_{X} amounts held per unit time, it is possible to calculate the NO_{X} held amount at any time.

Referring to FIG. 3, at the time t₁, the NO_{X} amount held in the NO_{X} holding material 13 exceeds the held amount judgment value for carrying out NO_{X} purge control. From the time t₁, NO_{X} purge control is carried out. The NO_{X} purge control makes the air-fuel ratio of the exhaust gas flowing into the NO_{X} holding material a stoichiometric air-fuel ratio or rich. The exhaust purification system in the present embodiment performs additional supplementary injection at the combustion chamber to thereby make the air-fuel ratio of the exhaust gas flowing into the NO_{X} holding material the stoichiometric air-fuel ratio.

FIG. 5 shows fuel injection patterns for normal operation of the internal combustion engine in the present embodiment. The injection pattern A is an injection pattern of fuel during normal operation. During normal operation, a main injection FM is performed at approximately compression top dead center TDC. The main injection FM is performed when the crank angle is approximately 0°. Further, for stabilization of the combustion of the main injection FM, a pilot injection FP is performed before the main injection FM. The pilot injection FP is performed when, for example, the crank angle is in a range of approximately 10° to approximately 40° before compression top dead center TDC.

During normal operation, as shown by the injection pattern B, the main injection FM may be performed alone without the pilot injection FP. In the present embodiment, the injection pattern where the pilot injection FP is performed will be taken as an example for the explanation. When operating under the injection pattern A during normal operation, the air-fuel ratio of the exhaust gas exhausted from the engine body is lean.

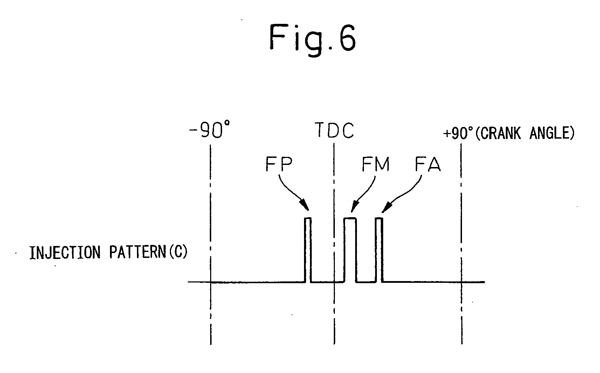

FIG. 6 shows the injection pattern when lowering the air-fuel ratio of the exhaust gas exhausted from the engine body. In the injection pattern C, following the main injection FM, an after injection FA is performed as a supplementary injection. The after injection FA is performed at a combustible timing after the main injection. The after injection FA is performed, for example, in the range where the crank angle after compression top dead center is up to approximately 40°.

By performing the after injection, the air-fuel ratio of the exhaust gas can be lowered. In the present embodiment, control is performed to reduce the intake air amount flowing into the combustion chamber. Referring to FIG. 1, by reducing the opening degree of the throttle valve 10, it is possible to reduce the intake air amount flowing into the combustion chamber 2. It is possible to further lower the air-fuel ratio of the exhaust gas flowing out from the combustion chamber 2. In this way, the air-fuel ratio of the exhaust gas flowing into the NO_{X} holding material 13 can be made the stoichiometric or rich.

Referring to FIG. 3, in the operating state up to the time t₁, fuel is injected to the combustion chamber 2 by the injection pattern A shown in FIG. 5. In the NO_{X} purge control period from the time t₁ until the time t₂, fuel is injected to the combustion chamber 2 by the injection pattern C shown in FIG. 6. By performing the NO_{X} purge control, it is possible to make the NO_{X} holding material 13 release the NO_{X} and use the carbon monoxide, unburnt fuel, or other reducing agents to convert the NO_{X} to N₂.

By performing the NO_{X} purge control, at the time t₂, the NO_{X} amount held in the NO_{X} holding material becomes substantially zero. At the time t₂, the NO_{X} purge control is ended and the normal operating state is shifted to. In the present embodiment, the NO_{X} purge control is carried out for a predetermined period of time. Further, in the NO_{X} purge control, a map of the released amount of NO_{X} as a function of the injection amount of the fuel in the combustion chamber and the engine rotational frequency etc. may be used to calculate the released amount of NO_{X}.

Referring to FIG. 2, the NO_{X} holding material in the present embodiment employs a metal containing silver as the catalyst metal 49. The inventors discovered that an NO_{X} holding material including a catalyst metal 49 containing silver falls in the NO_{X} purification ability when the NO_{X} holding material becomes a high temperature. That is, the inventors discovered that the efficiency of removing NO_{X} from the exhaust gas, that is, the NO_{X} purification rate, falls.

Further, the inventors discovered that if the temperature of the NO_{X} holding material 13 rises, the catalyst metal 49 carried on the catalyst carrier 48 will scatter in the form of silver nitrate. The inventors discovered that silver nitrate separates from the catalyst carrier 48 if at the boiling point or more. The inventors discovered that, if, for example, the silver nitrate becomes approximately 450°C or more, it separates from the catalyst carrier 48. In the present invention, the lowest temperature at which silver nitrate scattering occurs is referred to as the "scatter temperature". If the catalyst metal 49 scatters in the form of silver nitrate, the amount of catalyst metal contained in the NO_{X} holding material decreases. Therefore, for example, the holdable amount that can be held in the NO_{X} holding material decreases. Further, the reduction ability when reducing NO_{X} to N₂ falls. In this way, the NO_{X} purification rate of the NO_{X} holding material falls.

Referring to FIG. 1, the exhaust purification system in the present embodiment is provided with a particulate filter 16. If operation of the internal combustion engine continues, particulate matter gradually deposits on the particulate filter 16. The amount of particulate matter deposited on the particulate filter can be judged by the pressure difference detected by the pressure difference sensor 29. When the detected pressure difference exceeds an allowable value, it can be judged that the amount of particulate matter deposited on the particulate filter has exceeded an allowable amount. When the deposited amount of particulate matter exceeds the allowable amount, regeneration control is carried out to remove the deposited particulate matter. In the present embodiment, the amount of deposited particulate matter is calculated from the pressure difference before and after the particulate filter, however, the invention is not limited to this. Any method may be used to detect the deposited amount.

In regeneration of the particulate filter, the temperature of the particulate filter is raised to a temperature at which the particulate matter burns or higher. In the present embodiment, the particulate filter is raised to a target temperature or higher. By making the air-fuel ratio of the exhaust gas lean in this state, the deposited particulate matter is made to burn. The deposited particulate matter is removed.

In the regeneration control of the particulate filter 16, the particulate filter 16 is raised to, for example, 600°C or higher. In the present embodiment, the temperature of the exhaust gas exhausted from the engine body is raised to 600°C or more. Therefore, the temperature of the NO_{X} holding material 13 becomes the scatter temperature at which the catalyst metal scatters or more.

In the present embodiment, before regeneration control of the particulate filter, NO_{X} purge control of the NO_{X} holding material is performed. This makes the NO_{X} held at the catalyst metal be released. By making the NO_{X} be released, the catalyst metal returns to the form of silver. In the form of silver, the scattering of catalyst metal can be avoided even if at the scatter temperature or more. Therefore, by making the NO_{X} be released, it is possible to suppress the scattering of the catalyst metal.

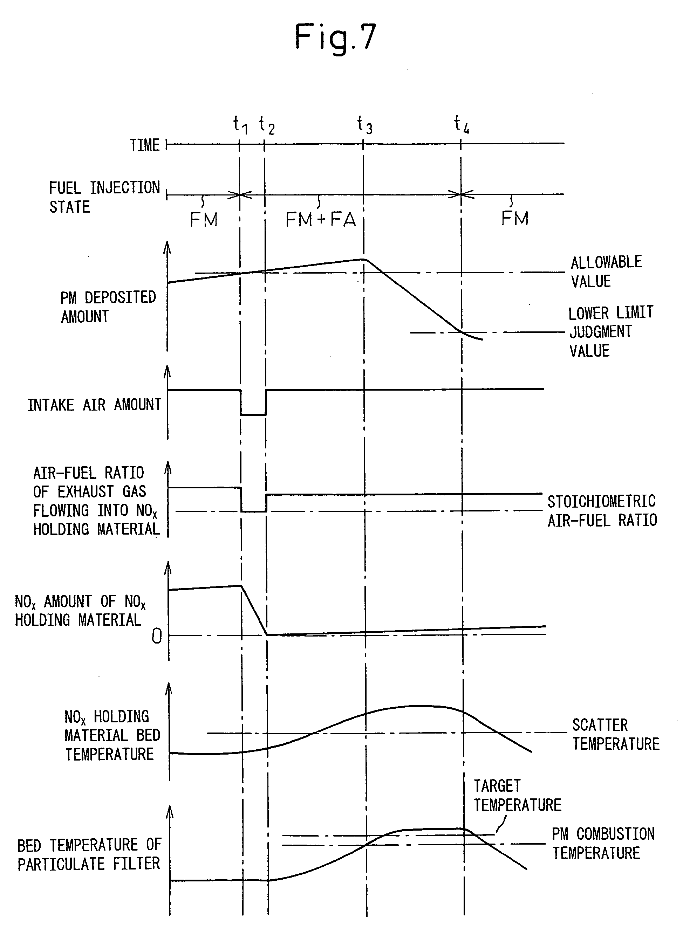

FIG. 7 shows a time chart of operational control in the present embodiment. FIG. 7 is a time chart for when performing particulate filter regeneration. Normal operation is carried out until the time t₁. At the time t₁, the deposited amount of the particulate matter at the particulate filter reaches the allowable amount. At the time t₁, a particulate filter regeneration request is sent.

In the present embodiment, when it is time to perform the regeneration control of the particulate filter, the NO_{X} purge control in the NO_{X} holding material is performed. In the example shown in FIG. 7, the NO_{X} purge control is performed in the period from the time t₁ to the time t₂. By performing the main injection and the after injection in the combustion chamber, the air-fuel ratio of the exhaust gas flowing into the NO_{X} holding material is made the stoichiometric air-fuel ratio. By performing the NO_{X} purge control, it is possible to reduce the NO_{X} amount held in the NO_{X} holding material at the time t₂ to substantially zero. That is, the amount of silver nitrate contained in the NO_{X} holding material can be reduced to substantially zero.

At the time t₂, the particulate filter regeneration control is started. At the time t₂, the intake air amount is restored. The air-fuel ratio of the exhaust gas exhausted from the engine body becomes lean. In the present embodiment, even after the time t₂, the after injection FA is continued to raise the temperature of the particulate filter.

Referring to FIG. 6, by performing the after injection FA, the afterburn period becomes longer, so the temperature of the exhaust gas exhausted from the engine body can be raised. Further, in the injection pattern C, the injection timing of the main injection FM is delayed from compression top dead center TDC. That is, the injection timing of the main injection FM is retarded. Along with the retarding of the injection timing of the main injection FM, the injection timing of the pilot injection FP is also retarded. By retarding the injection timing of the main injection FM, it is possible to raise the exhaust gas temperature. The temperature raising device for raising the temperature of the particulate filter is not limited to this. Any device that can raise the temperature of the particulate filter can be employed.

Referring to FIG. 7, at the time t₃, the bed temperature of the particulate filter reaches the combustion temperature of the particulate matter. Afterwards, the bed temperature of the particulate filter reaches the target temperature.

Along with the temperature rise of the particulate filter 16, the temperature of the NO_{X} holding material 13 also rises at the same time. The temperature of the NO_{X} holding material exceeds the scatter temperature. However, the NO_{X} holding material does not hold NO_{X}, that is, does not contain silver nitrate, so scattering of the catalyst metal can be avoided.

From the time t₃ to the time t₄, the particulate matter deposited on the particulate filter can be made to burn. At the time t₄, the deposited amount of particulate matter reaches the lower limit judgment value. At the time t₄, the regeneration control is ended. The deposited amount on the particulate filter reaching the lower limit judgment value can be detected for example from the output of the pressure difference sensor 29 arranged at the particulate filter 16. At the time t₄ on, normal operation is performed.

In the present embodiment, when it is time to perform the regeneration control of the particulate filter, NO_{X} purge control of the NO_{X} holding material is performed. When it is time to perform control to increase the temperature of the NO_{X} holding material to the scatter temperature or more, the NO_{X} purge control is performed to cause the release of the NO_{X} held at the NO_{X} holding material. Due to this configuration, it is possible to suppress scattering of the catalyst metal of the NO_{X} holding material when the temperature of the NO_{X} holding material is at the scatter temperature or above. The drop in the NO_{X} purification ability of the NO_{X} holding material can be suppressed.

In this regard, the NO_{X} purge control in the present embodiment performs the after injection FA in the combustion chamber. Therefore, the temperature of the exhaust gas rises as the air-fuel ratio of the exhaust gas drops. When starting the NO_{X} purge control, sometimes the NO_{X} holding material already has a high temperature. In such cases, when performing the NO_{X} purge control, the temperature of the NO_{X} holding material is liable to become the scatter temperature or more.

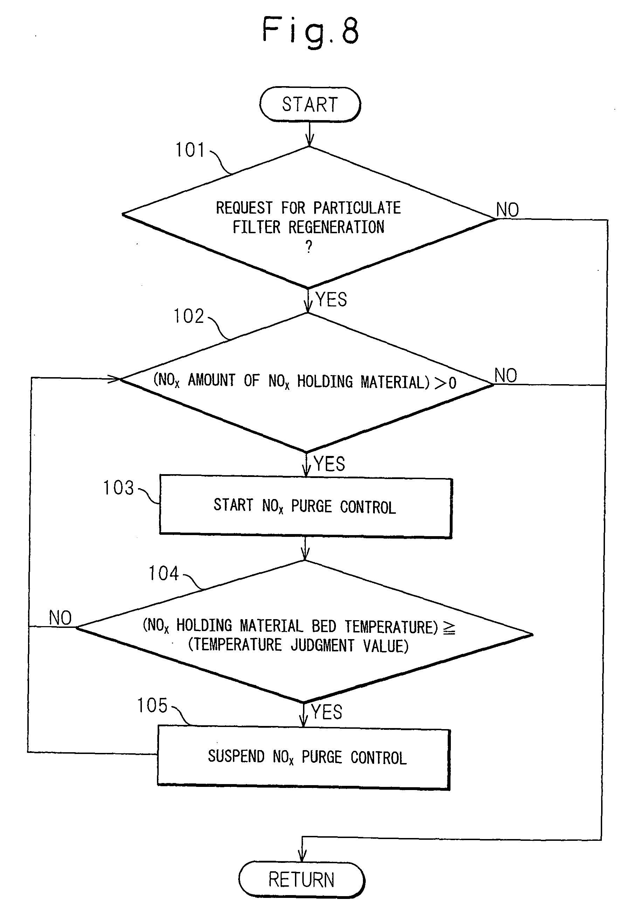

FIG. 8 shows a flowchart of second NO_{X} purge control in the present embodiment. FIG. 8 shows an example of a case where there has been a request for regeneration of the particulate filter. In the second NO_{X} purge control, when the temperature of the NO_{X} holding material is at a predetermined temperature judgment value or more, the NO_{X} purge control is suspended. It is waited until the temperature of the NO_{X} holding material falls.

At step 101, it is judged if there is a regeneration request for the particulate filter. At step 101, when there is no regeneration request for the particulate filter, this control is ended. When there is a regeneration request for the particulate filter, the routine proceeds to step 102.

At step 102, it is judged if the NO_{X} amount held in the NO_{X} holding material is greater than zero. That is, it is judged if NO_{X} is held in the NO_{X} holding material. When at step 102 the NO_{X} amount held in the NO_{X} holding material is zero, this control is ended. When at step 102 the NO_{X} amount held in the NO_{X} holding material is greater than zero, the routine proceeds to step 103.

At step 103, NO_{X} purge control is started. In the present embodiment, in the combustion chamber, in addition to main injection FM, after injection FA is performed. The temperature of the exhaust gas rises, so the temperature of the NO_{X} holding material rises.

Next, at step 104, during the period where NO_{X} purge control is performed, it is judged if the bed temperature of the NO_{X} holding material is a predetermined temperature judgment value or more. When at step 104 the temperature of the NO_{X} holding material is the temperature judgment value for suspending the NO_{X} purge control or more, the routine proceeds to step 105. That is, when the temperature of the NO_{X} holding material is liable to reach the silver nitrate scatter temperature, the routine proceeds to step 105. This temperature judgment value is a temperature sufficiently lower than the scatter temperature so that even if the NO_{X} purge control is continued for a predetermined period, the temperature of the NO_{X} holding material does not reach the scatter temperature of the silver nitrate.

At step 105, the NO_{X} purge control is suspended. In the present embodiment, the NO_{X} purge control is suspended for a predetermined length of time. Step 105 is not limited to this. A lower limit temperature judgment value may be set in advance and the NO_{X} purge control may be suspended until the temperature of the NO_{X} holding material becomes the lower limit temperature judgment value or less.

Next, the routine proceeds to step 102, where this control is repeated. Further, when at step 104 the bed temperature of the NO_{X} holding material is less than the temperature judgment value, the routine proceeds to step 102. At step 102, it is judged again if the NO_{X} amount held in the NO_{X} holding material is greater than zero. When the NO_{X} amount held in the NO_{X} holding material is zero, this control is ended.

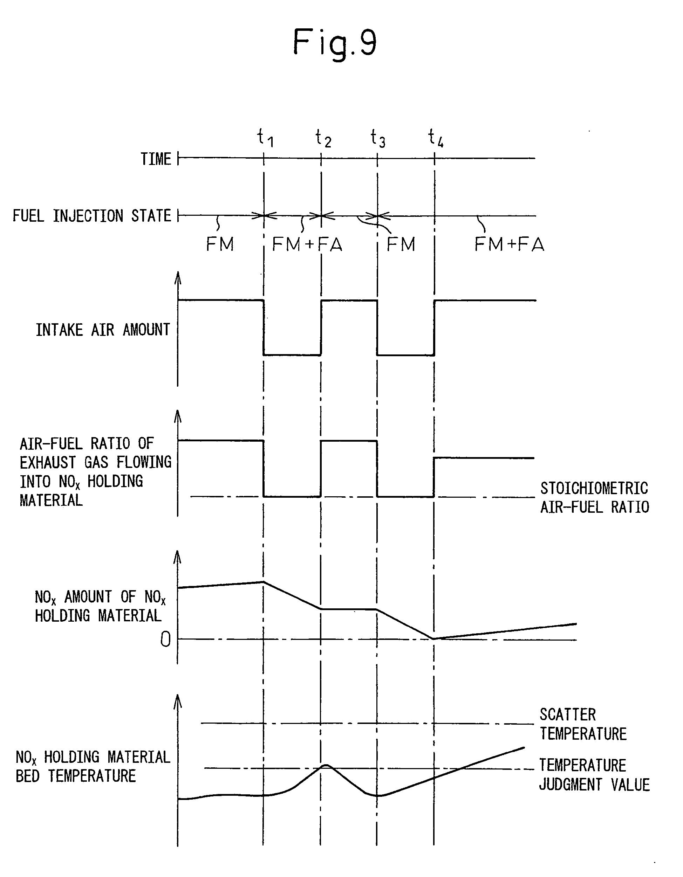

FIG. 9 shows a time chart of the second NO_{X} purge control in the present embodiment. Until the time t₁, normal operation is performed. In the example shown in FIG. 9, the bed temperature of the NO_{X} holding material is a temperature close to the scatter temperature. At the time t₁, the NO_{X} purge control is started. In the NO_{X} purge control, the after injection FA is performed whereby the temperature of the NO_{X} holding material rises. At the time t₂, the bed temperature of the NO_{X} holding material reaches a temperature judgment value for suspending the NO_{X} purge control. Therefore, at the time t₂, the NO_{X} purge control is suspended. By suspending the NO_{X} purge control, the temperature of the NO_{X} holding material drops. In the example shown in FIG. 9, the NO_{X} purge control is suspended for a predetermined length of time.

After the predetermined length of time has passed, at the time t₃, NO_{X} purge control is restarted. At the time t₃, the bed temperature of the NO_{X} holding material is a temperature lower than the temperature judgment value. By performing the NO_{X} purge control from the time t₃ to the time t₄, the NO_{X} amount held in the NO_{X} holding material becomes substantially zero.

In the second NO_{X} purge control, when the bed temperature of the NO_{X} holding material is becomes the predetermined temperature judgment value or more, the NO_{X} purge control is suspended. By employing this control, during the NO_{X} purge control period, it is possible to avoid the temperature of the NO_{X} holding material becoming the scatter temperature or more in the state where the NO_{X} holding material contains silver nitrate. In this way, the NO_{X} purge control may be performed intermittently.

In the present embodiment, by performing the after injection in addition to the main injection, the air-fuel ratio of the exhaust gas flowing into the NO_{X} holding material is made the stoichiometric or rich, however, the invention is not limited to this. Any device making the air-fuel ratio of the exhaust gas the stoichiometric air-fuel ratio or rich can be employed.

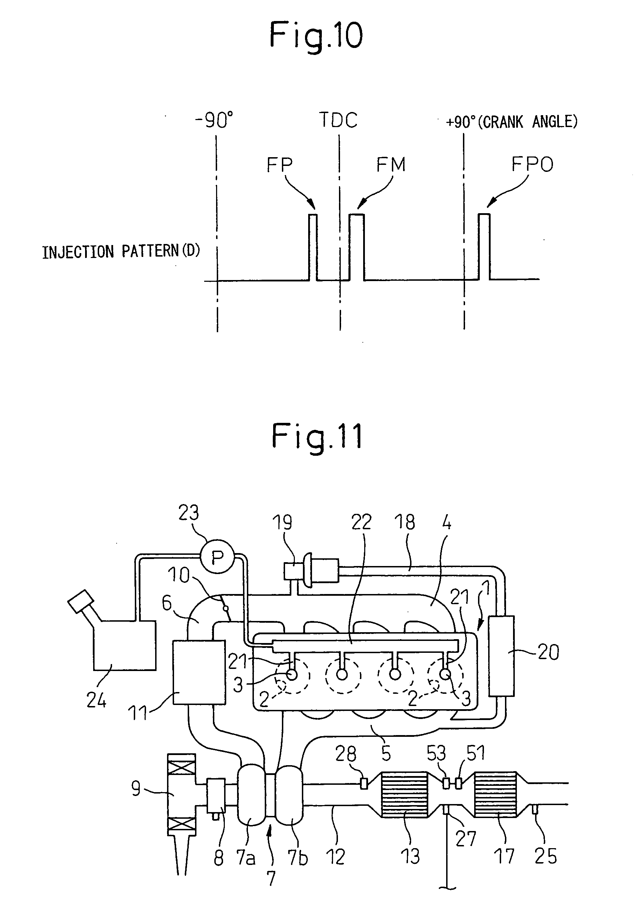

FIG. 10 shows another injection pattern when making the air-fuel ratio of the exhaust gas the stoichiometric air-fuel ratio or rich. The injection pattern D performs a post injection FPO after the main injection FM. The post injection FPO is an injection where fuel is not burned in the combustion chamber. The post injection FPO is a supplementary injection similar to the after injection. The post injection FPO is performed, for example, in a range of the crank angle after compression top dead center of approximately 90° to approximately 120°. By performing the post injection FPO in the combustion chamber, it is possible to make the air-fuel ratio of the exhaust gas flowing into the NO_{X} holding material the stoichiometric air-fuel ratio or rich.

Further, a fuel addition valve may be arranged upstream of the NO_{X} holding material in the engine exhaust passage for feeding unburnt fuel. The fuel from the fuel addition valve that is used can be the same fuel as the engine body for example. The fuel addition valve can be controlled by the electronic control unit for example. By feeding unburnt fuel from the fuel addition valve, it is possible to make the air-fuel ratio of the exhaust gas flowing into the NO_{X} holding material the stoichiometric air-fuel ratio or rich.

The exhaust purification system of the internal combustion engine in the present embodiment has the particulate filter arranged at an upstream side of the NO_{X} holding material, but the invention is not limited to this. The particulate filter may also be arranged at a downstream side of the NO_{X} holding material. Further, the exhaust purification system of the internal combustion engine may be provided with an NO_{X} selective reducing catalyst, oxidation catalyst, NO_{X} storage reduction catalyst, or other exhaust treatment device. Further, the NO_{X} holding material may be any exhaust treatment device so long as it includes a catalyst metal containing silver and treats NO_{X}.

In the present embodiment, as control whereby the temperature of the NO_{X} holding material rises to the scatter temperature or above, the particulate filter regeneration control was used as an example for the explanation. However, when it is time to perform any control whereby the temperature of the NO_{X} holding material rises to the scatter temperature or above, the NO_{X} purge control is carried out to remove silver nitrate from the NO_{X} holding material thereby allowing the suppression of a drop in NO_{X} purification ability.

The internal combustion engine in the present embodiment is arranged in an automobile, but the invention is not limited to this. The present invention can be applied to any internal combustion engine.

### Second Embodiment

Referring to FIG. 11 to FIG. 13, an exhaust purification system of an internal combustion engine in a second embodiment will be explained. In the present embodiment, as control whereby the temperature of the NO_{X} holding material rises to the scatter temperature or above, sulfur poisoning recovery control of an NO_{X} storage reduction catalyst will be used as an example for the explanation.

FIG. 11 is a schematic view of an internal combustion engine in a present embodiment. The exhaust purification system in the present embodiment is provided with an NO_{X} storage reduction catalyst (NSR) 17. The NO_{X} storage reduction catalyst 17 is arranged in the engine exhaust passage downstream of the NO_{X} holding material 13. Downstream of the NO_{X} storage reduction catalyst 17, there is arranged a temperature sensor 25 as a temperature detection device for detecting the temperature of the NO_{X} storage reduction catalyst 17. Upstream of the NO_{X} storage reduction catalyst 17, there is arranged an air-fuel ratio sensor 51 for detecting the air-fuel ratio of the exhaust gas flowing into the NO_{X} storage reduction catalyst 17. Upstream of the NO_{X} storage reduction catalyst 17, there is arranged an NO_{X} sensor 53 for detecting the NO_{X} amount flowing into the NO_{X} storage reduction catalyst 17. The output signals of these temperature sensor 25, air-fuel ratio sensor 51, and NO_{X} sensor 53 are input through corresponding AD converters 37 to the input port 35 (refer to FIG. 1).

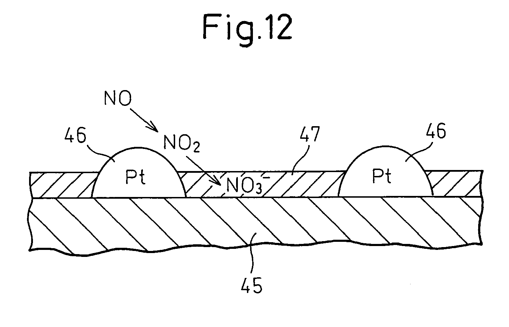

FIG. 12 shows an enlarged schematic cross-sectional view of the NO_{X} storage reduction catalyst. The NO_{X} storage reduction catalyst is comprised of a substrate on which a catalyst carrier 45 comprised of, for example, alumina, is formed. The surface of the catalyst carrier 45 carries dispersed catalyst metal 46 containing a precious metal. On the surface of the catalyst carrier 45, a layer of an NO_{X} absorbent 47 is formed. The catalyst metal 46 in the present embodiment contains platinum (Pt). As the ingredient comprising the NO_{X} absorbent 47, at least one ingredient selected from for example potassium (K), sodium (Na), cesium (Cs), or other alkali metals, barium (Ba), calcium (Ca), and other alkali earths, or, lanthanum (La), yttrium (Y), and other rare earths is used. The NO_{X} absorbent 47 in the present embodiment includes barium.

At the NO_{X} storage reduction catalyst, when the air-fuel ratio of the exhaust gas is lean, the NO contained in the exhaust gas is oxidized on the catalyst metal 46 and becomes NO₂. The NO₂ is stored in the form of nitrate ions NO₃⁻ in the NO_{X} absorbent 47. As opposed to this, when the air-fuel ratio of the exhaust gas is rich or the stoichiometric air-fuel ratio, the nitrate ions NO₃⁻ in the NO_{X} absorbent 47 are released in the form of NO₂ from the NO_{X} absorbent 47. The released NO_{X} is reduced to N₂ by the unburnt hydrocarbons and carbon monoxide contained in the exhaust gas.

Referring to FIG. 11, the exhaust purification system in the present embodiment performs purification of NO_{X} at both the NO_{X} holding material 13 and the NO_{X} storage reduction catalyst 17. When the temperature of the exhaust gas is low, the NO_{X} holding material 13 can hold the NO_{X}. For example, immediately after starting up the engine body, by holding the NO_{X} in the NO_{X} holding material 13, the NO_{X} can be removed from the exhaust gas. Further, if the exhaust gas temperature rises, the catalyst metal 46 of the NO_{X} storage reduction catalyst 17 becomes activated and the NO_{X} storage ability is improved. Therefore, during normal operation, both the NO_{X} holding material 13 and the NO_{X} storage reduction catalyst 17 can hold NO_{X}.

Further, when the temperature of the exhaust gas becomes high, mainly the NO_{X} absorbent 47 of the NO_{X} storage reduction catalyst 17 stores NO_{X}. For example, when the engine body runs for a long period of time at a high speed, sometimes the temperature of the exhaust gas rises and the NO_{X} holding ability of the NO_{X} holding material 13 falls. In such a case as well, the NO_{X} storage reduction catalyst 17 can store NO_{X}.

In the NO_{X} holding material 13, when the NO_{X} held amount exceeds an allowable value, NO_{X} purge control can be performed to release and reduce the NO_{X}.

At the NO_{X} storage reduction catalyst 17, the NO_{X} amount stored in the NO_{X} storage reduction catalyst is calculated. When the NO_{X} amount stored in the NO_{X} storage reduction catalyst 17 exceeds the allowable amount, NO_{X} release control is performed. In the NO_{X} release control, the air-fuel ratio of the exhaust gas flowing into the NO_{X} storage reduction catalyst 17 can be made the stoichiometric air-fuel ratio or rich so as to make the NO_{X} storage reduction catalyst 17 release the NO_{X} and reduce the NO_{X} to N₂.

The NO_{X} stored amount in the NO_{X} storage reduction catalyst 17 can be estimated by the output signal of the NO_{X} sensor 53 arranged at the upstream side of the NO_{X} storage reduction catalyst 17. Based on the output signal of the NO_{X} sensor 53, the NO_{X} amount flowing into the NO_{X} storage reduction catalyst 17 can be estimated. Through cumulative addition of the NO_{X} amounts flowing into the NO_{X} storage reduction catalyst 17 per unit time, it is possible to calculate the NO_{X} stored amount of the NO_{X} storage reduction catalyst 17 at any time.

Estimation of the NO_{X} amount stored in the NO_{X} storage reduction catalyst 17 is not limited to this. Any device can be used. For example, a map or the like may be used to calculate the NO_{X} amount flowing out from the NO_{X} holding material and calculate the NO_{X} amount stored in the NO_{X} storage reduction catalyst.

In this way, by arranging the NO_{X} holding material 13 in the engine exhaust passage and arranging the NO_{X} storage reduction catalyst 17 at the downstream side of the NO_{X} holding material 13, NO_{X} can be purified with a high purification rate in a broad range of temperature of the exhaust gas from low temperature to high temperature. Further, if compared with an exhaust purification system arranging only an NO_{X} storage reduction catalyst in the engine exhaust passage, the NO_{X} holding material can purify the NO_{X}, so it is possible to make the NO_{X} storage reduction catalyst smaller in size. The NO_{X} holding material can use silver or another catalyst metal, so it is possible to slash the amount of platinum and other precious metals used in the NO_{X} storage reduction catalyst.

In the present embodiment, the NO_{X} holding material 13 is arranged at the upstream side and the NO_{X} storage reduction catalyst 17 is arranged at the downstream side. The NO_{X} holding material 13 may also be arranged downstream of the NO_{X} storage reduction catalyst 17. However, for example, when the exhaust gas is a high temperature, sometimes NO_{X} flows out from the NO_{X} holding material 13. By arranging the NO_{X} holding material 13 upstream of the NO_{X} storage reduction catalyst 17, the NO_{X} flowing out from the NO_{X} holding material 13 can be purified at the NO_{X} storage reduction catalyst 17. Therefore, the NO_{X} holding material 13 is preferably arranged at the further upstream side from the NO_{X} storage reduction catalyst 17.

In this regard, exhaust gas contains SO_{X}, that is, SO₂. If SO₂ flows into the NO_{X} storage reduction catalyst 17, it is oxidized at the catalyst metal 46 and becomes SO₃. This SO₃ is absorbed by the NO_{X} absorbent 47 and forms BaSO₄ for example. The sulfate BaSO₄ is stable and does not break down easily. With simply only making the air-fuel ratio of the exhaust gas rich, the sulfate BaSO₄ does not break down and remains as it is. Therefore, the NO_{X} amount that can be stored by the NO_{X} storage reduction catalyst falls. The NO_{X} storage reduction catalyst therefore suffers from sulfur poisoning.

To recover from the sulfur poisoning, the temperature of the NO_{X} storage reduction catalyst is raised up to a temperature where SO_{X} can be released. Further, sulfur poisoning recovery control is performed making the air-fuel ratio of the exhaust gas flowing into the NO_{X} storage reduction catalyst rich or the stoichiometric air-fuel ratio. By performing sulfur poisoning recovery control, it is possible to make the NO_{X} storage reduction catalyst release the SO_{X}.

The SO_{X} amount stored in the NO_{X} storage reduction catalyst can for example be calculated from a map of the SO_{X} amount exhausted from the engine body per unit time as a function of the rotational frequency of the engine body and the fuel injection amount. This map is stored in the electronic control unit for example. By cumulatively adding the SO_{X} amount stored per unit time calculated according to the operating state, it is possible to estimate the SO_{X} amount stored in the NO_{X} storage reduction catalyst at any time. In the present embodiment, when the SO_{X} amount stored in the NO_{X} storage reduction catalyst exceeds the allowable value, sulfur poisoning recovery control is performed.

Referring to FIG. 6, in the sulfur poisoning recovery control of the present embodiment, the after injection is performed after the main injection in the combustion chamber so as to raise the temperature of the NO_{X} storage reduction catalyst. Further, the injection timing of the main injection FM is retarded so as to raise the temperature of the NO_{X} storage reduction catalyst. The temperature raising device raising the temperature of the NO_{X} storage reduction catalyst is not limited to this. Any device that can raise the temperature of the NO_{X} storage reduction catalyst can be employed.

In this regard, when performing the sulfur poisoning recovery control, the temperature of the exhaust gas becomes high. The temperature of the exhaust gas is raised to 650°C or more for example. The temperature of the NO_{X} holding material 13 becomes the scatter temperature or more. Therefore, in the NO_{X} holding material 13, when NO_{X} is held, the catalyst metal scatters in the form of silver nitrate. In the present embodiment, when it is time to perform the sulfur poisoning recovery control, the NO_{X} purge control is performed. That is, in the same way as how NO_{X} purge control is performed before the regeneration control of the particulate filter in the first embodiment, the NO_{X} purge control is performed before the sulfur poisoning recovery control.

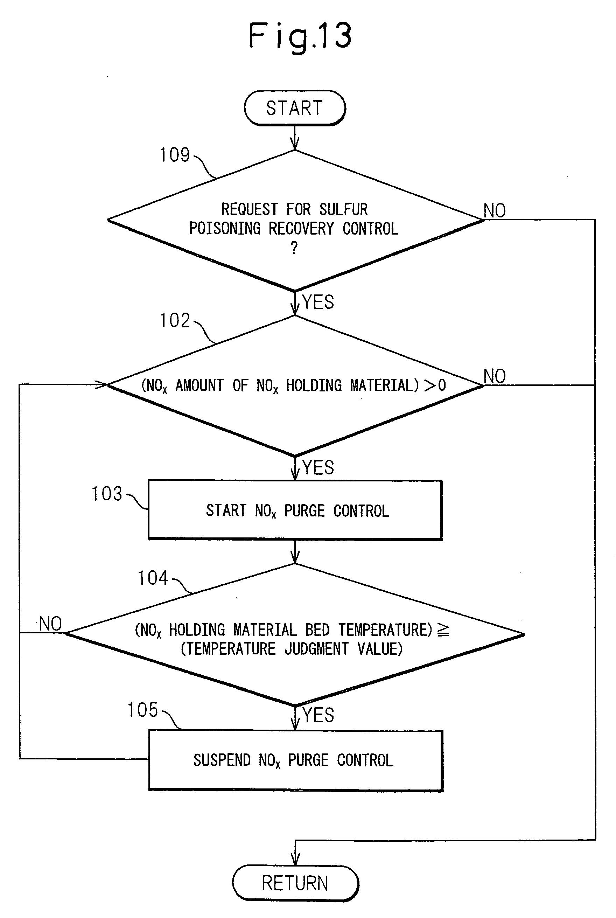

FIG. 13 shows a flowchart of the NO_{X} purge control in the present embodiment. At step 109, it is judged if there is a request for sulfur poisoning recovery control. That is, it is judged if the NO_{X} storage reduction catalyst stores more SO_{X} than the allowable value. If at step 109 there is no request for sulfur poisoning recovery control, this control is ended. If at step 109 there is a request for sulfur poisoning recovery control, the routine proceeds to step 102. At step 102 to step 105, the same NO_{X} purge control as the second NO_{X} purge control in the first embodiment is performed (see FIG. 8).

In this way, by performing the NO_{X} purge control when it is time to perform the sulfur poisoning recovery control, it is possible to eliminate the NO_{X} holding material holding NO_{X} in the form of silver nitrate. When performing the sulfur poisoning recovery treatment, the scattering of the catalyst metal can be avoided even when the temperature of the NO_{X} holding material is the scatter temperature or more. The drop in the NO_{X} purification ability of the NO_{X} holding material can therefore be suppressed.

In the present embodiment, control similar to the second NO_{X} purge control in the first embodiment was used as an example for the explanation, but the invention is not limited to this. Control similar to the first NO_{X} purge control in the first embodiment can also be performed.

The rest of the configuration, actions, and effects are similar to those of the first embodiment. The explanations are not repeated here.

### Third Embodiment

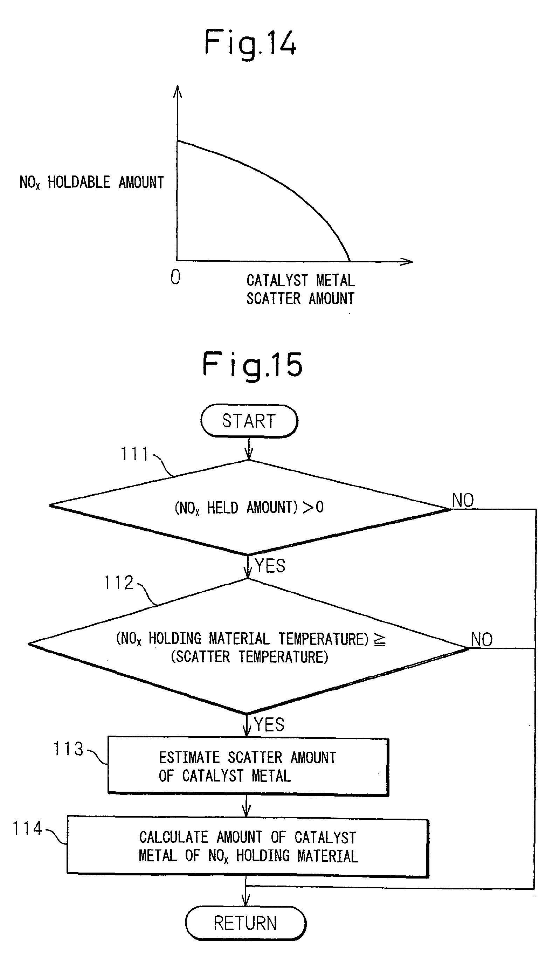

Referring to FIG. 14 to FIG. 21, an exhaust purification system of an internal combustion engine in a third embodiment will be explained. The exhaust purification system of an internal combustion engine in the present embodiment performs an exhaust purification system operation in accordance with scattering of the catalyst metal when the catalyst metal of the NO_{X} holding material scatters.

In the operation of the internal combustion engine, sometimes it is difficult to predict the inflow of high temperature exhaust gas into the NO_{X} holding material. For example, when an operating state where the rotational frequency of the engine body is extremely high and the fuel injection amount in the combustion chamber is large is sustained for a long period of time, the temperature of the exhaust gas flowing into the NO_{X} holding material becomes high. Further, when the distance between the NO_{X} holding material and the engine body is short, the temperature of the exhaust gas flowing into the NO_{X} holding material rises. In such cases, sometimes the NO_{X} holding material ends up exceeding the scatter temperature of the catalyst metal. When the NO_{X} holding material holds NO_{X}, the catalyst metal scatters in the form of silver nitrate.

FIG. 14 is a graph showing the relationship of the scattered amount of catalyst metal and the holdable amount of NO_{X} in the NO_{X} holding material. When the scattered amount of the catalyst metal is large, the amount of catalyst metal contained in the NO_{X} holding material becomes smaller. Therefore, the scattered amount of catalyst metal increases and the holdable amount of NO_{X} decreases. The exhaust purification system of an internal combustion engine in the present embodiment is provided with a device for estimating the amount of catalyst metal remaining in the NO_{X} holding material when catalyst metal scatters from the NO_{X} holding material.

FIG. 15 shows a flowchart for estimating the amount of the catalyst metal of the NO_{X} holding material in the present embodiment. This control can be repeated every predetermined time period. At step 111, it is judged if the NO_{X} held amount of the NO_{X} holding material is greater than zero. When the NO_{X} held amount is zero, this control is ended. When the held amount of NO_{X} is greater than zero, the routine proceeds to step 112.

At step 112, it is judged if the temperature of the NO_{X} holding material is the scatter temperature of the catalyst metal or more. When the temperature of the NO_{X} holding material is less than the scatter temperature, this control is ended. When the temperature of the NO_{X} holding material is the scatter temperature or more, the routine proceeds to step 113.

At step 113, the scattered amount of the catalyst metal is estimated. In the present embodiment, a map of the scattered amount of the catalyst metal is used. At step 113, the scattered amount of the catalyst metal at this time is calculated.

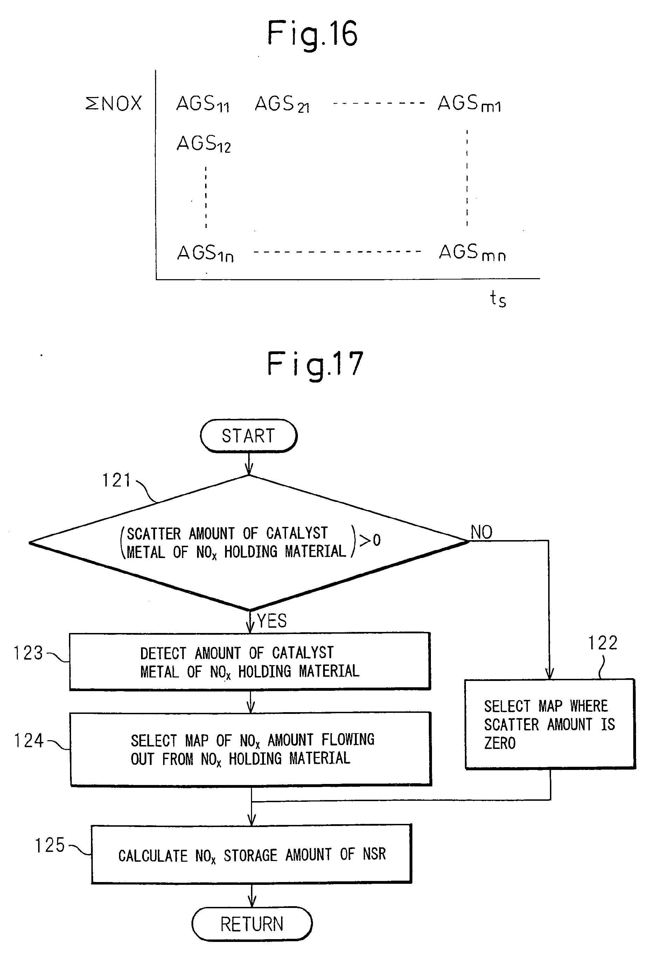

FIG. 16 shows a map of the scattered amount of catalyst metal scattering from the NO_{X} holding material in the form of silver nitrate. The scattered amount of the catalyst metal remains almost constant if the scatter temperature or more regardless of the temperature of the NO_{X} holding material. A map is created in advance for the scattered amount AGS of the catalyst metal per unit time as a function of the time tₛ that the NO_{X} holding material is at the scatter temperature or more and the NO_{X} amount ΣNOX held in the NO_{X} holding material. This map is stored in the ROM 32 of the electronic control unit 30 for example. The amount of scattered catalyst metal can be calculated based on the time that the NO_{X} holding material is at the scatter temperature or more and the NO_{X} amount held in the NO_{X} holding material.

Referring to FIG. 15, next, at step 114, the remaining amount of catalyst metal is calculated from the scattered amount at this time. By subtracting the scattered amount of catalyst metal at this time from the amount of catalyst metal remaining at the NO_{X} holding material calculated from the previous calculation, the amount of catalyst metal remaining at the NO_{X} holding material can be calculated. Further, by cumulatively adding the scattered amounts until now and subtracting the cumulative value of the scattered amounts from the initial amount of catalyst metal of the NO_{X} holding material, the amount of catalyst metal remaining at the NO_{X} holding material can be calculated.

The exhaust purification system of an internal combustion engine for performing the first operational control in the present embodiment is provided with an NO_{X} holding material (for example see FIG. 1 or FIG. 11). In the first operational control of the present embodiment, according to the calculated amount of the catalyst metal of the NO_{X} holding material, the held amount judgment value for performing the NO_{X} purge control is calculated. That is, the less the amount of catalyst metal remaining at the NO_{X} holding material, the smaller the held amount judgment value. In the present embodiment, the held amount judgment value as a function of the amount of catalyst metal of the NO_{X} holding material is created in advance and stored in the ROM 32 of the electronic control unit. It is updated to a held amount judgment value corresponding to the calculated amount of catalyst metal of the NO_{X} holding material. In the operational control, when the NO_{X} amount of the NO_{X} holding material exceeds the updated held amount judgment value, NO_{X} purge control is performed. By performing this control, it is possible to suppress the saturation of NO_{X} holding material with NO_{X} and the outflow of NO_{X} from the NO_{X} holding material.

Next, the second operational control in this present embodiment will be explained. The second operational control is operational control for the exhaust purification system of the second embodiment. Referring to FIG. 11, the exhaust treatment device performing the second operational control is provided with an NO_{X} holding material 13 and an NO_{X} storage reduction catalyst 17 arranged downstream of the NO_{X} holding material 13.

FIG. 17 shows a flowchart of the second operational control in the present embodiment. In the second operational control as well, the amount of catalyst metal of the NO_{X} holding material at any time is calculated. The second operational control can be repeated every predetermined time period.

At step 121, it is judged if the scattered amount of the catalyst metal of the NO_{X} holding material is greater than zero. That is, it is judged if the catalyst metal scatters. When the scattered amount of the catalyst metal of the NO_{X} holding material is zero, the routine proceeds to step 122. At step 122, when the scatter amount of the catalyst metal is zero, a map of the NO_{X} amount flowing out from the NO_{X} holding material is selected based on the temperature of the NO_{X} holding material.

At step 121, when the scatter amount of the catalyst metal of the NO_{X} holding material is greater than zero, the routine proceeds to step 123. At step 123, the amount of catalyst metal of the NO_{X} holding material is detected.

Next, at step 124, a map of the NO_{X} amount flowing out from the NO_{X} holding material is selected. The NO_{X} amount flowing out from the NO_{X} holding material 13 corresponds to the NO_{X} amount stored in the NO_{X} storage reduction catalyst 17. In the present embodiment, the NO_{X} amount flowing out from the NO_{X} holding material 13 is calculated by the map.

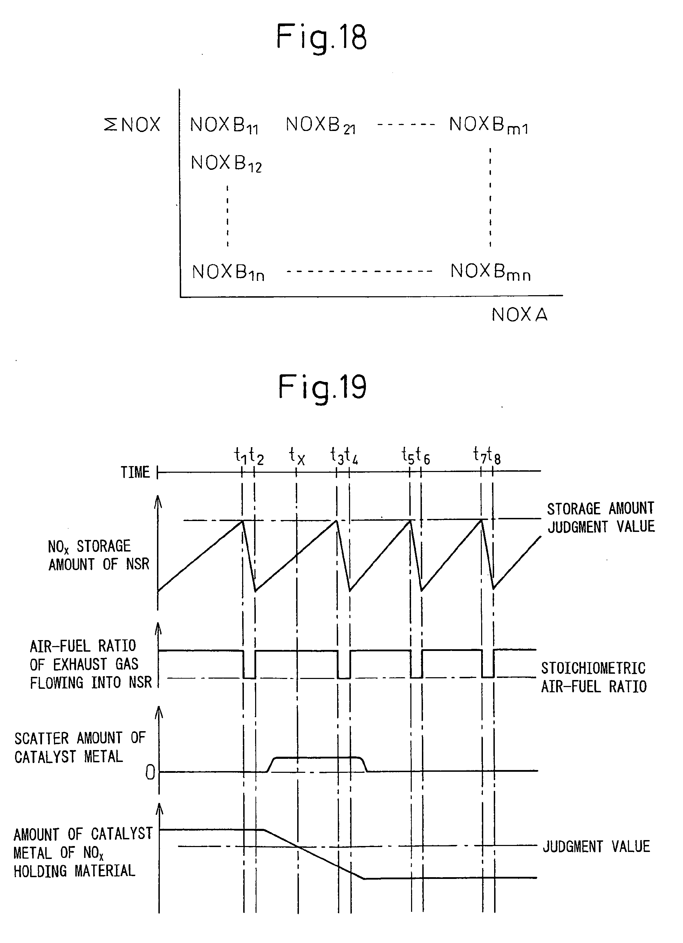

FIG. 18 shows a map of the NO_{X} amount flowing out from the NO_{X} holding material. FIG. 18 is the map when at a predetermined temperature with a predetermined catalyst metal amount. The NO_{X} amount NOXB flowing out from the NO_{X} holding material per unit time can be calculated as a function of the NO_{X} amount NOXA per unit time flowing into the NO_{X} holding material and the NO_{X} amount ΣNOX held in the NO_{X} holding material. The NO_{X} amount NOXA flowing into the NO_{X} holding material per unit time can be calculated from a map as a function of the engine rotational frequency and fuel injection amount for example (see FIG. 4).

A plurality of maps are created in advance for the NO_{X} amount flowing out from the NO_{X} holding material corresponding to each temperature and catalyst metal amount and are stored in the ROM 32 of the electronic control unit 30 for example. These maps are made so that when the amount of catalyst metal of the NO_{X} holding material becomes lower, the NO_{X} amount flowing out from the NO_{X} holding material becomes larger.

Referring to FIG. 17, at step 124, a map of the NO_{X} amount flowing out from the NO_{X} holding material is selected based on the amount and temperature of the catalyst metal of the NO_{X} holding material. Using the selected map, the NO_{X} amount NOXB per unit time flowing out from the NO_{X} holding material 13 is calculated. When the amount of the catalyst metal of the NO_{X} holding material is lower, the NO_{X} amount flowing out from the NO_{X} holding material becomes larger.

At step 125, using the selected map, the NO_{X} stored amount of the NO_{X} storage reduction catalyst is calculated. By cumulatively adding the NO_{X} amounts NOXB flowing in per unit time, the NO_{X} amount stored in the NO_{X} storage reduction catalyst at any time can be calculated. That is, by adding the current calculated NOX amount flowing into the NO_{X} storage reduction catalyst to the previously calculated NO_{X} stored amount, the NO_{X} stored amount can be calculated.

In this way, in the second operational control of the present embodiment, the amount of catalyst metal remaining at the NO_{X} holding material when the catalyst metal scatters from the NO_{X} holding material is calculated. Based on the remaining amount of the catalyst metal, the NO_{X} amount flowing out from the NO_{X} holding material is calculated, and the NO_{X} amount stored in the NO_{X} storage reduction catalyst is calculated.

FIG. 19 shows a time chart of the second operational control in the present embodiment. At the time t₁, the NO_{X} stored amount of the NO_{X} storage reduction catalyst reaches a stored amount judgment value set in advance as the allowable amount. In the time period when normal operation is performed, NO_{X} release control is performed in the period from the time t₁ to the time t₂ and in the period from the time t₃ to the time t₄. Further, NO_{X} release control is performed in the period from the time t₅ to the time t₆ and the period from the time t₇ to the time t₈.

At part of the time period from the time t₂ to the time t₅, the catalyst metal of the NO_{X} holding material scatters due to a predetermined operating state. The amount of the catalyst metal of the NO_{X} holding material decreases along with the scattering of the catalyst metal. At the time t_{X}, the amount of catalyst metal of the NO_{X} holding material becomes the judgment value for modifying the map of the NO_{X} amount flowing out from the NO_{X} holding material or less. Therefore, at normal operation from the time t₄ on, the map for calculating the NO_{X} amount flowing out from the NO_{X} holding material is modified. At step 124 of FIG. 17, the newly selected map is used. The estimated amount of the NO_{X} amount stored per unit time becomes larger.

Therefore, in the operation from the time t₄ on, the interval of NO_{X} release control becomes shorter. The length of time from the time t₄ to the time t₅ becomes shorter than the length of time from the time t₂ to the time t₃.

The map is updated according to the scatter amount of the catalyst metal in this way. By estimating the NO_{X} amount flowing out from the NO_{X} holding material based on the amount of remaining catalyst metal, the NO_{X} amount flowing out from the NO_{X} holding material can be more accurately estimated. Therefore, in the present embodiment, it is possible to more accurately estimate the NO_{X} amount stored in the NO_{X} storage reduction catalyst. This can suppress the inflow of an amount of NO_{X} larger than the estimated NO_{X} amount into the NO_{X} storage reduction catalyst and saturation of the NO_{X} storage reduction catalyst. The outflow of NO_{X} from the NO_{X} storage reduction catalyst can be avoided.

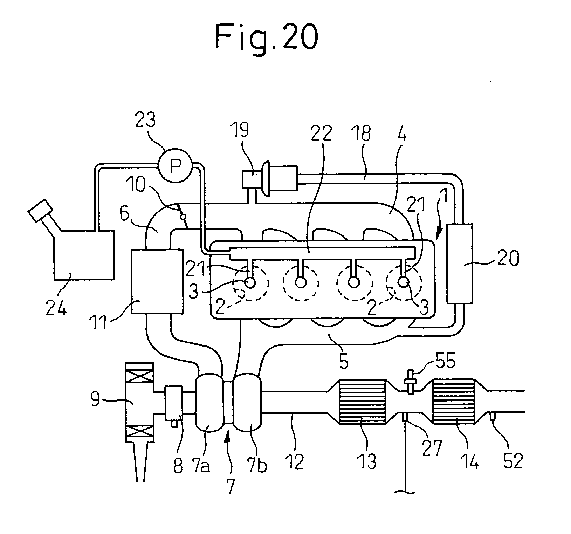

FIG. 20 shows a schematic view of an exhaust purification system performing the third operational control in the present embodiment. The exhaust purification system performing the third operational control is provided with an NO_{X} selective reducing catalyst (SCR) 14. The NO_{X} selective reducing catalyst 14 is an exhaust treatment device able to selectively reduce NO_{X} by feeding a reducing agent. The NO_{X} selective reducing catalyst 14 is arranged at the engine exhaust passage downstream of the NO_{X} holding material 13. Downstream of the NO_{X} selective reducing catalyst 14, there is arranged a temperature sensor 52 as a temperature detection device for detecting the temperature of the NO_{X} selective reducing catalyst 14. The output signal of the temperature sensor 52 is input through a corresponding AD converter 37 to the input port 35 (refer to FIG. 1).

The NO_{X} selective reducing catalyst 14 in the present embodiment can selectively reduce NO_{X} using ammonia as a reducing agent. The NO_{X} selective reducing catalyst can be comprised from zeolite adsorbing ammonia and containing iron or other transition metals. Further, it can be comprised from a titania-vanadium-based catalyst not having an ammonia adsorbing function. The NO_{X} selective reducing catalyst 14 in the present embodiment is comprised from ammonia adsorption type Fe zeolite.

The exhaust purification system is provided with a reducing agent feeding device feeding a reducing agent to the NO_{X} selective reducing catalyst 14. In the present embodiment, ammonia is used as the reducing agent. The reducing agent feeding device contains a urea feed valve 55. The urea feed valve 55 is arranged in the engine exhaust passage at an upstream side of the NO_{X} selective reducing catalyst 14. The urea feed valve 55 is formed so as to inject urea into the engine exhaust passage. The reducing agent feeding device in the present embodiment is made so as to feed urea, however, the invention is not limited to this. It may also be made so as to feed ammonia water.

The urea feed valve 55 is connected through a corresponding drive circuit 38 to the output port 36 of the electronic control unit 30. The urea feed valve 55 in the present embodiment is controlled by the electronic control unit 30 (see FIG. 1).

If urea is fed from the urea feed valve 55 to the exhaust gas flowing in the engine exhaust passage, the urea is hydrolyzed. By the urea being hydrolyzed, ammonia and carbon dioxide are created. By the created ammonia being fed to the NO_{X} selective reducing catalyst 14, the NO_{X} selective reducing catalyst 14 reduces the NO_{X} contained in the exhaust gas to nitrogen.

This exhaust purification system can purify the NO_{X} at both the NO_{X} holding material 13 and the NO_{X} selective reducing catalyst 14 during normal operation. During normal operation of the engine body 1, it is possible to purify NO_{X} by the NO_{X} holding material 13 repeatedly holding the NO_{X} and performing NO_{X} purge control. Further, by feeding a reducing agent from the urea feed valve 55 to the NO_{X} selective reducing catalyst 14, the NO_{X} selective reducing catalyst 14 can purify the NO_{X}.

When the temperature of the exhaust gas is low, NO_{X} can be removed from the exhaust gas by adsorption of NO_{X} at the NO_{X} holding material 13. When the temperature of the exhaust gas is high, the NO_{X} purification rate in the NO_{X} holding material 13 drops, however, by selectively reducing the NO_{X} at the NO_{X} selective reducing catalyst 14, NO_{X} can be purified. In such a way, NO_{X} can be purified at a wide range of temperature from low temperature to high temperature. Further, it is possible to slash the amount of use of platinum and other precious metals and purify NO_{X}.

In the present embodiment, the NO_{X} holding material 13 is arranged at the upstream side and the NO_{X} selective reducing catalyst 14 is arranged at the downstream side. The NO_{X} holding material 13 may also be arranged downstream of the NO_{X} selective reducing catalyst 14. However, when the exhaust gas has a high temperature for example, sometimes NO_{X} flows out from the NO_{X} holding material 13. By arranging the NO_{X} holding material 13 upstream of the NO_{X} selective reducing catalyst 14, the NO_{X} flowing out from the NO_{X} holding material 13 can be purified by the NO_{X} selective reducing catalyst 14. Therefore, the NO_{X} holding material 13 is preferably arranged more to the upstream side than the NO_{X} selective reducing catalyst 14.

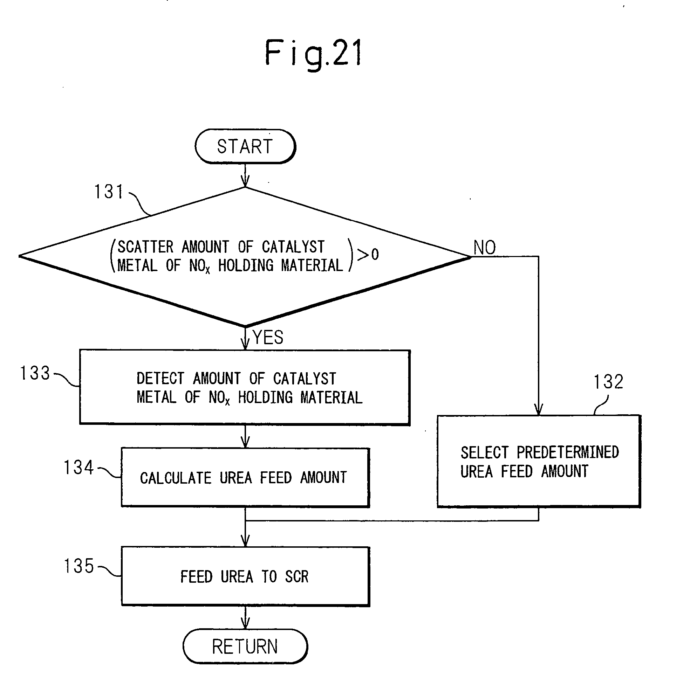

FIG. 21 shows a flowchart of a third operational control in the present embodiment. In the third operational control of the present embodiment, when the amount of catalyst metal in the NO_{X} holding material drops due to scattering, control increasing the purified amount of NO_{X} at the downstream NO_{X} selective reducing catalyst is performed.

At step 131, it is judged if the scatter amount of the catalyst metal of the NO_{X} holding material is greater than zero. When at step 131 the scatter amount of the catalyst metal of the NO_{X} holding material is zero, the routine proceeds to step 132. At step 132, a feed amount of urea set in advance is selected as the feed amount of urea from the urea feed valve. When at step 131 the scatter amount of the catalyst metal of the NO_{X} holding material is greater than zero, the routine proceeds to step 133. At step 133, the amount of the catalyst metal of the NO_{X} holding material 13 is detected.

Next, at step 134, the amount of urea fed from the urea feed valve 55 is calculated based on the amount of catalyst metal of the NO_{X} holding material. The amount of urea fed from the urea feed valve can be calculated using a map of the urea feed amount per unit time as a function of the NO_{X} amount NOXA per unit time flowing into the NO_{X} holding material and the NO_{X} amount held in the NO_{X} holding material. A plurality of maps are created in advance for the urea amounts corresponding to different temperatures and catalyst metal amounts and are stored in the ROM 32 of the electronic control unit 30 for example. These maps are formed so that the smaller the amount of the catalyst metal of the NO_{X} holding material, the greater the urea feed amount. The amount of urea fed from the urea feed valve can be calculated with such a urea feed amount map. The calculation of the feed amount of the urea is not limited to this. The amount may be calculated by any method based on the amount of the catalyst metal of the NO_{X} holding material.

Next, at step 135, urea is fed from the urea feed valve by the urea feed amount selected at step 132 or the urea feed amount calculated at step 134. If the scatter amount of the catalyst metal is increased, the amount of catalyst metal of the NO_{X} holding material decreases. If the amount of catalyst metal decreases, the NO_{X} amount flowing out from the NO_{X} holding material increases. Therefore, the NO_{X} amount flowing into the NO_{X} selective reducing catalyst increases. The feed amount of urea from the urea feed valve increases along with an increase of the inflow amount of NO_{X} to the NO_{X} selective reducing catalyst.

In the present embodiment, urea is intermittently injected from the urea feed valve. When increasing the feed amount of urea, the urea injection interval can be shortened. Further, the urea feed amount can be increased by increasing one injection amount.

Thus, in the third operational control of the present embodiment, the amount of the catalyst metal remaining in the NO_{X} holding material when the catalyst metal scatters from the NO_{X} holding material is estimated. The less the amount of catalyst metal remaining, the more the increase in the feed amount of the reducing agent of the NO_{X} selective reducing catalyst. By employing this configuration, when the catalyst metal scatters at the NO_{X} holding material, the purified amount of NO_{X} at the NO_{X} selective reducing catalyst on the downstream side can be increased, and the outflow of NO_{X} from the NO_{X} selective reducing catalyst can be suppressed.

In the present embodiment, a map is used to estimate the scatter amount of the catalyst metal, then the amount of the catalyst metal remaining in the NO_{X} holding material is estimated, however, the invention is not limited to this. Any method may be used to estimate the amount of the catalyst metal remaining at the NO_{X} holding material. For example, NO_{X} sensors are arranged at the upstream side and at the downstream side of the NO_{X} holding material. It is also possible to estimate the purification rate of NO_{X} in the NO_{X} holding material based on the NO_{X} amount flowing into the NO_{X} holding material and the NO_{X} amount flowing out from the NO_{X} holding material and estimate the amount of catalyst metal remaining at the NO_{X} holding material from this NO_{X} purification rate.

The rest of the configuration, actions, and effects are similar to the first or second embodiments, so the explanations are not repeated here.

### Fourth Embodiment

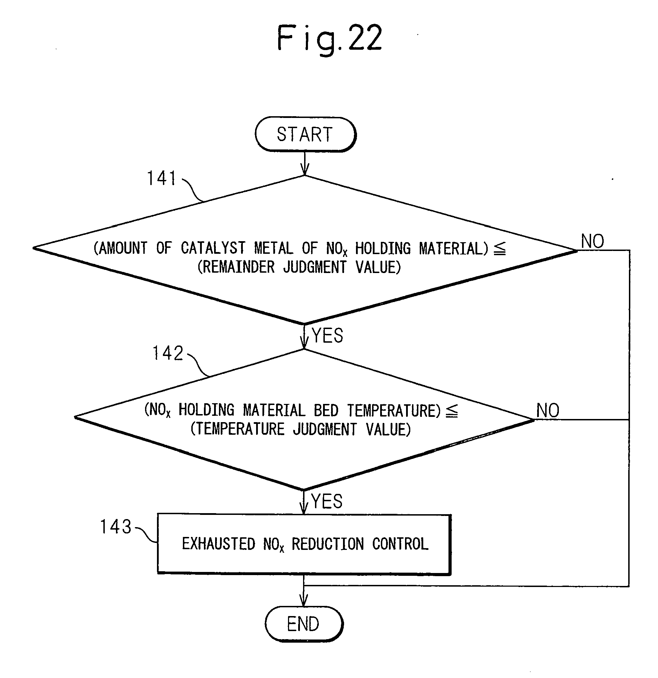

Referring to FIG. 22 to FIG. 28, an exhaust purification system of an internal combustion engine in a fourth embodiment will be explained. The exhaust purification system of an internal combustion engine in the present embodiment is provided with an NO_{X} holding material (for example, see FIG. 1). The NO_{X} holding material includes a catalyst metal containing silver. The exhaust purification system of an internal combustion engine in the present embodiment performs control reducing the NO_{X} amount exhausted from the engine body when the catalyst metal of the NO_{X} holding material scatters.

FIG. 22 shows a flowchart of a first operational control in the present embodiment. The first operational control shown in FIG. 22 can be repeated every predetermined time period. In the first operational control of the present embodiment, when the catalyst metal of the NO_{X} holding material scatters and the temperature of the NO_{X} holding material is a predetermined temperature or less, control is performed for reducing the NO_{X} amount exhausted from the engine body.

At step 141, it is judged if the amount of catalyst metal of the NO_{X} holding material is a predetermined remainder judgment value or less. When at step 141 the amount of catalyst metal of the NO_{X} holding material is greater than the predetermined remainder judgment value, this control is ended. When the amount of catalyst metal is the predetermined remainder judgment value or less, the routine proceeds to step 142.

At step 142, it is judged if the temperature of the NO_{X} holding material is a predetermined temperature judgment value or less.

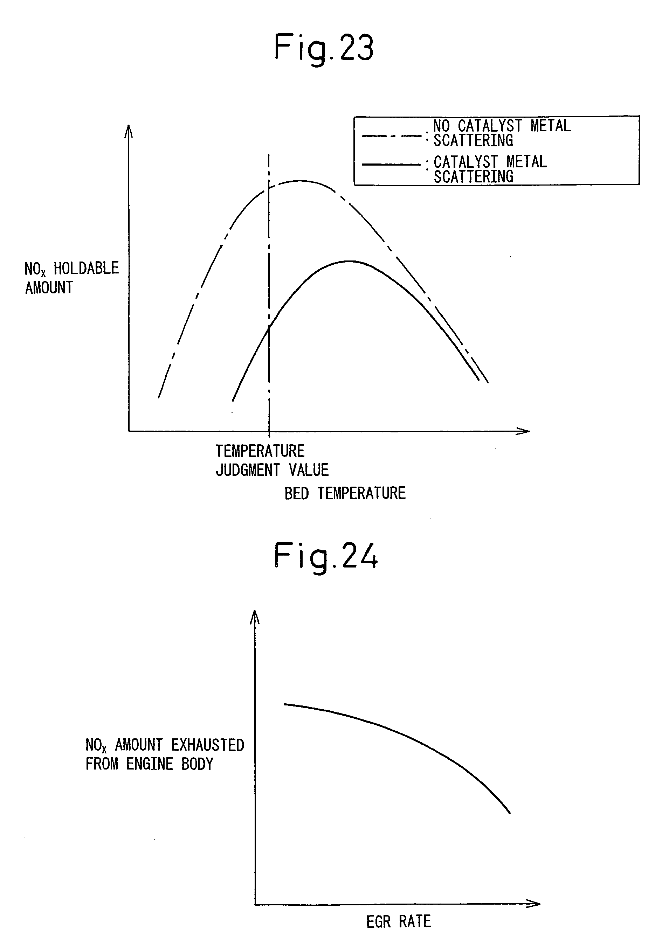

FIG. 23 shows a graph explaining the relationship of the NO_{X} holding material bed temperature and the NO_{X} holdable amount. A graph for when the scatter amount of the catalyst metal is zero is shown by one dot-chain line. Further, a graph for after a predetermined amount of catalyst metal has scattered is shown by a solid line.

It will be understood that due to the catalyst metal scattering, the maximum amount that the NO_{X} holding material can hold, that is, the NO_{X} holdable amount, falls. It will be understood that the drop in the NO_{X} holdable amount is large at the region where the bed temperature of the NO_{X} holding material is low. In the present embodiment, a temperature judgment value is set in advance. For this temperature judgment value, it is possible to select the point where, for example, the NO_{X} holdable amount becomes smaller than a predetermined value at the time when a predetermined amount of the catalyst metal scatters.

Referring to FIG. 22, when at step 142 the bed temperature of the NO_{X} holding material is larger than the temperature judgment value for performing exhausted NO_{X} reduction control, this control is ended. When the bed temperature of the NO_{X} holding material is the temperature judgment value or less, the routine proceeds to step 143. At step 143, exhausted NO_{X} reduction control is performed to reduce the NO_{X} amount exhausted from the engine body. In the exhausted NO_{X} reduction control in the present embodiment, the recirculation rate (EGR rate) of the engine body is increased.

FIG. 24 is a graph showing the relationship of the recirculation rate of the engine body and the NO_{X} amount exhausted from the engine body. The abscissa is the recirculation rate, and the ordinate is the NO_{X} amount exhausted from the engine body per unit time. The recirculation rate is the ratio of flow rate of the recirculated exhaust gas to all gas flowing into the combustion chamber (recirculation rate = (recirculation exhaust gas amount)/(recirculation exhaust gas amount + intake air amount)). If the proportion of the exhaust gas increases, the recirculation rate increases. It will be understood that the NO_{X} amount exhausted from the engine body decreases if the recirculation rate increases.

Referring to FIG. 1, in the present embodiment, the recirculated exhaust gas amount is increased by increasing the opening degree of the EGR control valve 19 arranged in the EGR passage 18. Because the NO_{X} amount exhausted from the engine body 1 drops, the outflow of NO_{X} from the NO_{X} holding material 13 can be suppressed even when the NO_{X} purification ability of the NO_{X} holding material 13 drops.

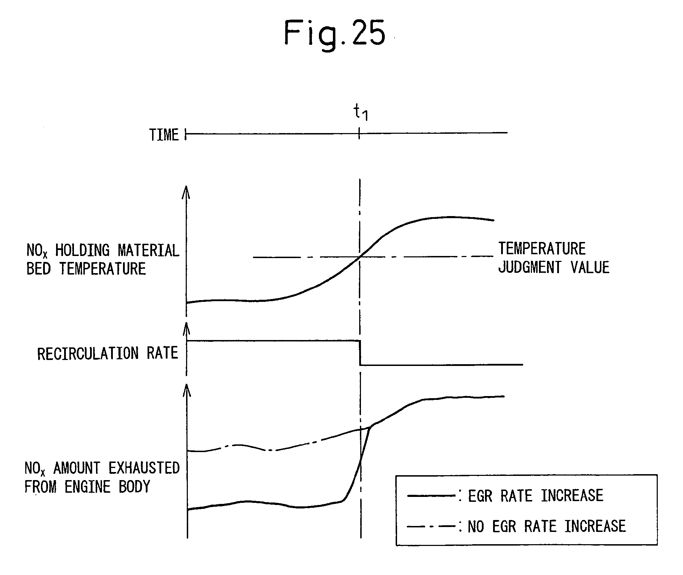

FIG. 25 shows a time chart of the first operational control in the present embodiment. FIG. 25 is a time chart immediately after the engine body is started up. For example, immediately after the engine body 1 is started up, the bed temperature of the NO_{X} holding material is low. The NO_{X} holding material temperature gradually rises with the startup of the engine body. At the time t₁, the NO_{X} holding material bed temperature reaches the temperature judgment value.

In the example shown in FIG. 25, the NO_{X} holding material has an amount of catalyst metal of the predetermined remainder judgment value or less. In the first operational control, exhausted NO_{X} reduction control is performed until the time t₁. That is, the recirculation rate of the engine body 1 is increased. Because the recirculation rate is increased until the time t₁, the NO_{X} amount exhausted from the engine body can be suppressed. At the time t₁, the bed temperature of the NO_{X} holding material reaches the temperature judgment value, so the recirculation rate at the time of normal operation is returned to.

Thus, the less the amount of catalyst metal remaining in the NO_{X} holding material, the more the NO_{X} amount exhausted from the engine body can be reduced. In the present embodiment, when the amount of catalyst metal of the NO_{X} holding material is the remainder judgment value or less, the recirculation rate is increased by exactly a predetermined amount, however, the invention is not limited to this. The NO_{X} amount exhausted from the engine body may also be adjusted according to the amount of the catalyst metal of the NO_{X} holding material. For example, a plurality of remainder judgment values may be set and control performed to gradually reduce the NO_{X} amount exhausted from the engine body as the amount of catalyst metal of the NO_{X} holding material decreases.

In the first operational control in the present embodiment, exhausted NO_{X} reduction control is performed when the bed temperature of the NO_{X} holding material is the temperature judgment value or less. The first operational control is not limited to this. For example, a plurality of temperature judgment values may be set and control performed to gradually reduce the NO_{X} amount exhausted from the engine body as the bed temperature of the NO_{X} holding material drops.

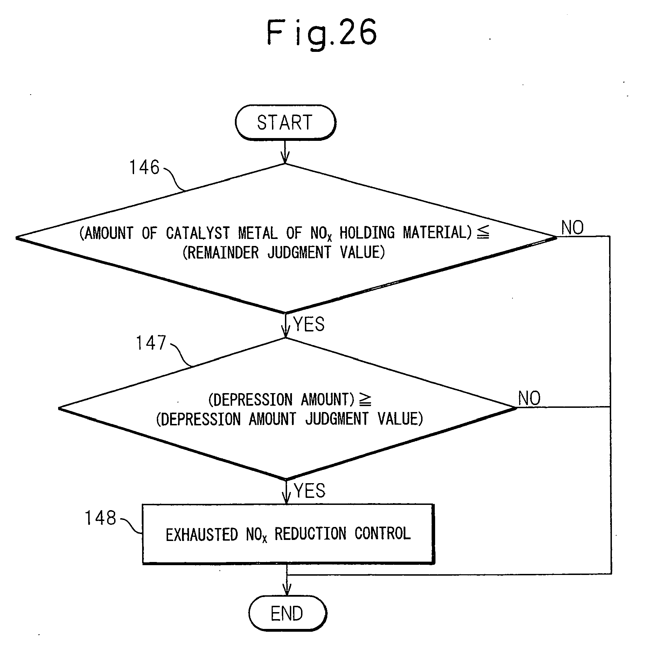

FIG. 26 shows a flowchart of the second operational control in the present embodiment. The second operational control shown in the FIG. 26 can be repeated every predetermined time period for example. In the second operational control, when the catalyst metal of the NO_{X} holding material scatters and there is a request to accelerate the vehicle speed, exhausted NO_{X} reduction control is performed to reduce the NO_{X} amount exhausted from the engine body.

At step 146, it is judged if the amount of catalyst metal of the NO_{X} holding material is the remainder judgment value or less. When at step 146 the amount of catalyst metal of the NO_{X} holding material is greater than the remainder judgment value, this control is ended. When at step 146 the amount of catalyst metal of the NO_{X} holding material is the remainder judgment value or less, the routine proceeds to step 147.

At step 147, it is judged if there is an acceleration request for the vehicle. In the present embodiment, it is judged if the depression amount of the accelerator pedal is a depression judgment value or more. Referring to FIG. 1, the depression amount of the accelerator pedal 40 can be detected by the load sensor 41. When the depression amount of the accelerator pedal 40 is lower than the depression judgment value, this control is ended. When the depression amount of the accelerator pedal is the depression judgment amount or more, the routine proceeds to step 148.

At step 148, exhausted NO_{X} reduction control is performed. As the exhausted NO_{X} reduction control, in the same way as the first operational control of the present embodiment, the NO_{X} amount exhausted from the engine body is reduced by control increasing the recirculation rate of the engine body.

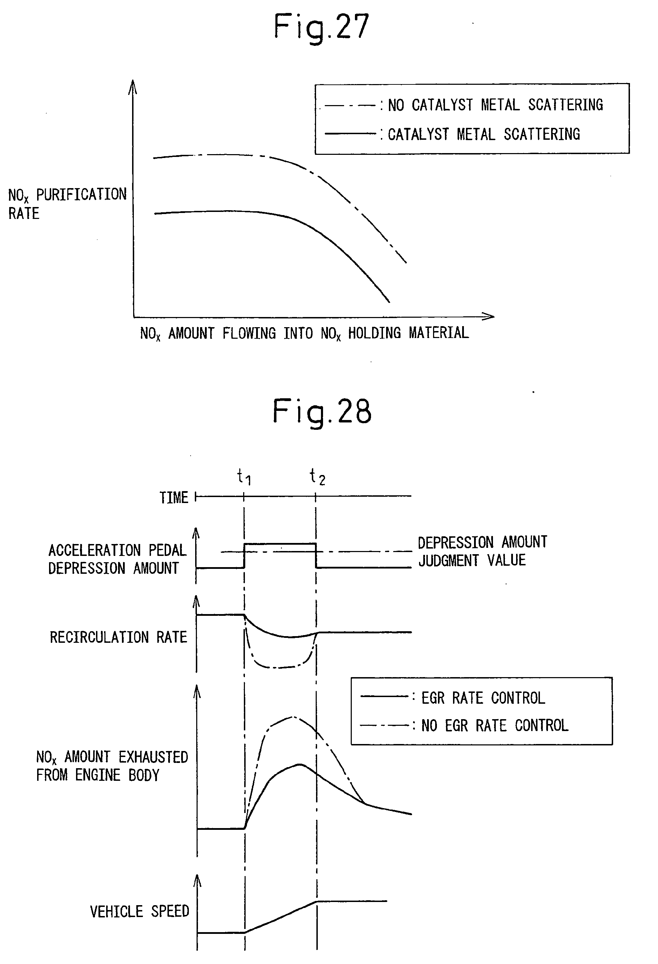

FIG. 27 is a graph showing the relationship of the NO_{X} amount inflowing to the NO_{X} holding material and the NO_{X} purification rate of the NO_{X} holding material. The graph for when the scatter amount of the catalyst metal is zero is shown by the one dot-dash line, while the graph after a predetermined amount of catalyst metal has scattered is shown by the solid line. When the NO_{X} amount flowing into the NO_{X} holding material is low, a substantially constant NO_{X} purification rate is exhibited. However, if the NO_{X} amount flowing into the NO_{X} holding material increases, the purification speed of the NO_{X} holding material becomes insufficient and the NO_{X} purification rate drops. Further, it will be understood that due to the catalyst metal scattering, the NO_{X} purification rate drops.

When there is an acceleration request, the NO_{X} amount exhausted per unit time increases. For example, the engine rotational frequency of the engine body increases and the NO_{X} amount exhausted from the engine body per unit time increases. In the present embodiment, when the depression amount of the accelerator pedal is the depression judgment value or more, control is performed to reduce the NO_{X} amount exhausted from the engine body.

FIG. 28 shows a time chart of the second operational control in the present embodiment. Until the time t₁, normal operation is performed. In the period from the time t₁ to the time t₂, the depression amount of the accelerator pedal becomes larger. From the time t₁ to the time t₂, the vehicle speed increases.

At the time t₁, the depression amount of the accelerator pedal becomes the depression judgment value or more. By depressing the accelerator pedal 40, the opening degree of the throttle valve 10 increases and the intake air amount increases. Therefore, the recirculation rate drops. In the present embodiment, control is performed so that the drop of the recirculation rate becomes smaller. That is, the recirculation rate is increased in the period from the time t₁ to the time t₂ so that the recirculation rate becomes larger than when exhausted NO_{X} reduction control is not performed. By performing this control, the NO_{X} amount exhausted from the engine body can be made smaller, and the NO_{X} amount flowing out from the NO_{X} holding material can be suppressed.

In the second operational control in the present embodiment, when the depression amount of the accelerator pedal is the depression judgment value or more, exhausted NO_{X} reduction control is performed. The second operational control is not limited to this. For example, a plurality of depression judgment values may be set and control performed to reduce the NO_{X} amount exhausted from the engine body gradually the larger the depression amount of the accelerator pedal.

The exhaust purification system in the present embodiment reduces the NO_{X} amount exhausted from the engine body when in an operating state where the catalyst metal scatters from the NO_{X} holding material and the NO_{X} is liable to flow out from the NO_{X} holding material. With this configuration, it is possible to suppress the outflow of NO_{X} from the NO_{X} holding material. Further, it is possible to suppress the outflow of NO_{X} from the exhaust purification system of the internal combustion engine.

In the exhausted NO_{X} reduction control in the present embodiment, control increasing the recirculation rate in the engine body is performed, however, the invention is not limited to this. Any control that reduces the NO_{X} exhausted from the engine body may be performed. For example, the fuel injection timing in the combustion chamber may be retarded. For example, by retarding the injection timing of the main injection, the fuel temperature at the time of fuel combustion drops, and the NO_{X} amount created can be reduced.

Further, in the present embodiment, control is performed to reduce the NO_{X} amount exhausted from the engine body when the catalyst metal scatters and a predetermined NO_{X} amount flows out from the NO_{X} holding material, however, the invention is not limited to this. Exhausted NO_{X} reduction control may be performed at any time when the catalyst metal scatters. For example, control may be performed reducing the NO_{X} amount exhausted from the engine body gradually according to the scatter amount of the catalyst metal.

In the present embodiment, the exhaust purification system of an internal combustion engine in the first embodiment was used as an example for the explanation, however, the invention is not limited to this. The invention can be applied to any exhaust purification system of an internal combustion engine provided with an NO_{X} holding material.

The rest of the configuration, actions, and effects are similar to those of either of the first to third embodiments, so the explanations are not repeated here.

The above embodiments can be appropriately combined. In the above drawings, the same or corresponding parts are assigned the same reference numerals. Note that, the above embodiments are illustrative and do not limit the present invention. Further, in the embodiments, modifications included in the claims are intended.

### Reference Signs List

1 engine body
2 combustion chamber
13 NO_{X} holding material
14 NO_{X} selective reducing catalyst
16 particulate filter
17 NO_{X} storage reduction catalyst
30 electronic control unit
48 catalyst carrier
49 catalyst metal

## Claims

1. An exhaust purification system of an internal combustion engine comprising an NO_{X} holding material arranged in an engine exhaust passage, having a catalyst metal containing silver, holding NO_{X} contained in the exhaust gas in the form of silver nitrate at the catalyst metal when an air-fuel ratio of inflowing exhaust gas is lean, and releasing the held NO_{X} if the air-fuel ratio of the inflowing exhaust gas becomes a stoichiometric air-fuel ratio or rich,
wherein said NO_{X} holding material has a scatter temperature at which catalyst metal scatters in the form of silver nitrate if the temperature rises,
when it is time to perform control to raise the temperature of the NO_{X} holding material to the scatter temperature or above, the system makes the air-fuel ratio of the exhaust gas flowing into the NO_{X} holding material a stoichiometric air-fuel ratio or rich to thereby make the NO_{X} holding material release the held NO_{X}.

2. An exhaust purification system of an internal combustion engine as set forth in claim 1, further comprising an NO_{X} storage reduction catalyst arranged in the engine exhaust passage downstream of the NO_{X} holding material, including a catalyst metal and an NO_{X} absorbent holding NO_{X}, holding the NO_{X} contained in the exhaust gas at the NO_{X} absorbent when the air-fuel ratio of the inflowing exhaust gas is lean, and releasing the held NO_{X} when the air-fuel ratio of the inflowing exhaust gas becomes the stoichiometric air-fuel ratio or rich,
wherein the NO_{X} storage reduction catalyst holds SO_{X} besides NO_{X}, and, when it is time to perform sulfur poisoning recovery control raising the temperature of the NO_{X} storage reduction catalyst to an SO_{X} releasable temperature and making the air-fuel ratio of the exhaust gas flowing into the NO_{X} storage reduction catalyst the stoichiometric air-fuel ratio or rich so as to release the SO_{X}, the NO_{X} holding material is made to release the held NO_{X}.

3. An exhaust purification system of an internal combustion engine as set forth in claim 1, further comprising a particulate filter arranged in the engine exhaust passage and trapping particulate matter contained in the exhaust gas,
wherein when it is time to perform regeneration control raising the temperature of the particulate filter to the temperature where the trapped particulate matter burns, the NO_{X} holding material is made to release the held NO_{X}.

4. An exhaust purification system of an internal combustion engine as set forth in claim 1, performing control estimating the amount of catalyst metal remaining at the NO_{X} holding material when catalyst metal scatters from the NO_{X} holding material, and reducing the NO_{X} amount exhausted to the engine exhaust passage from the engine body in accordance with the drop in the amount of remaining catalyst metal.

5. An exhaust purification system of an internal combustion engine as set forth in claim 1, performing control making the air-fuel ratio of exhaust gas flowing into the NO_{X} holding material the stoichiometric air-fuel ratio or rich so as to release NO_{X} when a held amount of NO_{X} of the NO_{X} holding material exceeds a predetermined held amount judgment value,
estimating the amount of catalyst metal remaining at the NO_{X} holding material when the catalyst metal scatters from the NO_{X} holding material, and decreasing the held amount judgment value in accordance with the drop in the amount of remaining catalyst metal.

6. An exhaust purification system of an internal combustion engine as set forth in claim 1, further comprising an NO_{X} selective reducing catalyst arranged in the engine exhaust passage downstream of the NO_{X} holding material and selectively reducing NO_{X} by feeding a reducing agent,
estimating the amount of catalyst metal remaining at the NO_{X} holding material when catalyst metal scatters from the NO_{X} holding material, and increasing the feed amount of reducing agent to the NO_{X} selective reducing catalyst in accordance with the drop in the amount of remaining catalyst metal.

7. An exhaust purification system of an internal combustion engine as set forth in claim 1, estimating the amount of catalyst metal remaining at the NO_{X} holding material when catalyst metal scatters from the NO_{X} holding material, and estimating the NO_{X} amount flowing out from the NO_{X} holding material based on the remaining amount of catalyst metal.
